(19) Europäisches Patentamt
European Patent Office
Office européen des brevets

(11) **EP 1 912 899 B1**

(12) **EUROPÄISCHE PATENTSCHRIFT**

(45) Veröffentlichungstag und Bekanntmachung des Hinweises auf die Patenterteilung:
**10.10.2012 Patentblatt 2012/41**

(21) Anmeldenummer: **06776660.0**

(22) Anmeldetag: **08.08.2006**

(51) Int Cl.:
*H01M 10/05* (2010.01)          *C01G 53/00* (2006.01)
*H01M 4/02* (2006.01)           *H01M 4/48* (2010.01)
*H01M 4/52* (2010.01)

(86) Internationale Anmeldenummer:
**PCT/EP2006/007816**

(87) Internationale Veröffentlichungsnummer:
**WO 2007/019986 (22.02.2007 Gazette 2007/08)**

(54) **ANORGANISCHE VERBINDUNGEN**

INORGANIC COMPOUNDS

COMPOSES INORGANIQUES

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **12.08.2005 DE 102005038158**

(43) Veröffentlichungstag der Anmeldung:
**23.04.2008 Patentblatt 2008/17**

(73) Patentinhaber: **Toda Kogyo Europe GmbH 40210 Düsseldorf (DE)**

(72) Erfinder:
• **ALBRECHT, Sven 38642 Goslar (DE)**

• **KRUFT, Michael Brights Grove, Ontario N0N 1C0 (CA)**
• **MALCUS, Stefan 38640 Goslar (DE)**

(74) Vertreter: **Woods, Geoffrey Corlett J A Kemp 14 South Square Gray's Inn London WC1R 5JJ (GB)**

(56) Entgegenhaltungen:
**WO-A-2004/040677      WO-A-2004/092073 US-A1- 2002 053 663**

**Beschreibung**

Die vorliegende Erfindung betrifft eine chemische Verbindung der Formel $Ni_bM1_cM2_d(O)_x(OH)_y$, ein Verfahren zu deren Herstellung, sowie deren Verwendung als Vorstoff zur Herstellung von Kathodenmaterial für Lithium-Sekundärbatterien.

Tragbare und schnurlose elektrische Geräte sind weit verbreitet. Bedingt durch die immer weiter fortschreitend Miniaturisierung dieser tragbaren elektronischen Geräte, ist der Bedarf an immer kleineren und leichteren Sekundärbatterien mit hoher Energiedichte, die als Energiequelle für solche Geräte dienen, in den letzten Jahren rasant gestiegen. Lithium-Sekundärbatterien mit nichtwässrigen Elektrolytflüssigkeiten haben die gewünschten Eigenschaften.

Dieser Typ von Sekundärbatterien zeichnet sich durch eine positive Elektrode aus, deren Aktivmaterial Lithiumionen reversibel einlagern und abgeben kann. Als geeignete aktive Substanzen für die positiven Elektroden solcher Sekundärbatterien sind zusammengesetzte Oxide bekannt, welche jeweils Lithium und mindestens ein Übergangsmetall enthalten. Beispiele sind $LiCoO_2$, $LiNiO_2$ oder auch $LiNi_{0,8}Co_{0,2}O_2$. Diese Materialien weisen jedoch diverse Nachteile auf. Das $LiCoO_2$ welches gegenwärtig noch am häufigsten in Lithium-Sekundärbatterien Verwendung findet, ist durch einen sehr hohen Cobalt-Preis belastet. Nickel ist zwar weniger teuer als Kobalt, allerdings weisen die hoch Nickelhaltigen Aktivmassen den Nachteil auf, dass sie eingesetzt in Sekundärbatterien, eine unzureichende thermische Stabilität der Batterie bewirken.

Unter den genannten Materialien befand sich noch keine aktive Substanz für Lithium-Sekundärbatterien, bei der die Lade-Entlade-Kapazität, die Beständigkeit im Verlauf der elektrochemischen Zyklen, die thermische Sicherheit sowie der Kostenaspekt gleichzeitig zufrieden stellend waren.

In der JP 10-27611 wurde zur Verbesserung der elektrochemischen Eigenschaften vorgeschlagen ein mindestens bimetallisches Mischhydroxid als Vorstoff zur Synthese des Lithiummischmetalloxides einzusetzen. Neben den Elementen Nickel und Cobalt werden dabei unter anderem auch die Elemente Aluminium und Mangan als dritte metallische Komponente für die Kofällung des Mischmetallhydroxides genannt. Es wird empfohlen, dass die Menge der Dotierungselemente (metallische Komponenten mit Ausnahme von Nickel) 10 - 30 Mol-% der Gesamtmetallmenge beträgt. Bei einer Menge dieser metallischen Dotierkomponenten von kleiner 10 Mol% zeigt eine Batterie mit dieser Aktivmasse eine unzureichende Zyklenbeständigkeit, während bei einer Menge von größer 30 Mol-% die sphärische Partikelform im Vorstoff schwer aufrecht zu erhalten ist.

In der US 2002/0053663 A1 und der US 2003/0059490 A1 werden zusammengesetzte Oxide vorgeschlagen, welche Lithium, Nickel, Cobalt sowie Mangan enthalten. Dabei bilden kogefällte Mischhydroxide aus Nickel, Kobalt und Mangan den Ausgangsstoff für die späteren Mischoxide. Durch die Dotierelemente Cobalt und Mangan im Lithiummischmetalloxid soll sowohl das elektrochemische Lade -/Entladeverhalten der Sekundärbatterie als auch die Hochtemperaturstabilität verbessert werden. Um diese Ziele zu erreichen, sind gegenüber der in JP 10-27611 genannten Verbindungen höhere Konzentrationen an Cobalt und Mangan erforderlich. Als obere Grenze für Cobalt sowie Mangan werden in der US 2002/0053663 A1 jeweils 33 Mol%, bezogen auf die Gesamtmenge der metallischen Übergangselemente genannt. Gemäß US 2002/0053663 A1 ist es bis dato sehr schwierig gewesen einen geeigneten Vorstoff für die Mischmetalloxide herzustellen. Insbesondere ist es nicht gelungen einen Mischmetallhydroxid bestehend aus den Elementen Nickel, Cobalt und Mangan kozufällen, welches hinsichtlich der Klopfdichte des Pulvers den Anforderungen genügen würde. Bei den Mischmetalloxiden ist es sehr wichtig, daß sich diese durch eine hohe Klopfdichte auszeichnen, weil die hohe Klopfdichte zur Erhöhung der volumetrischen Energiedichte der Batterie führt. Dabei nimmt die Klopfdichte des kogefällten Mischmetallhydroxides direkten Einfluss auf die spätere Klopfdichte des Lithium-Mischmetalloxides. In der US 2002/0053663 A1 gelingt die Synthese der Mischhydroxide enthaltend Nickel, Cobalt und Mangan mit hoher Klopfdichte von 1,5 g/cm³ oder größer, indem der Fällprozesses des Mischhydroxides entweder in einer Inertgasatmosphäre stattfindet oder ein Reduktionsmittel in der Produktsuspension zugegen ist. Es wird davon ausgegangen, dass durch heftiges Rühren während der Fällreaktion durch die Inklusion von Luft eine partielle Oxidation der Elemente Co (II) und Mangan (II) stattfindet, was zu einer Herabsetzung der Klopfdichte für das kogefällte Mischhydroxid führt. In der US 2002/0053663 A1 wird eine hohe Rührgeschwindigkeit empfohlen, was zu einem Abreibungsmechanismus zwischen den Partikeln führt. Die Wechselwirkung zwischen Abrasion und Partikelwachstum soll ein Garant für die Produktion sphärischer Partikel sein. Es ist daher naheliegend, daß die gewünschte Abrasion zu einer Begrenzung der mittleren Korngrösse der Sekundärpartikel führt.

In der US2003/0054251 A1 wird ein optimierter Verfahrensweg zur Synthese nickel- und manganhaltiger Mischoxide als Aktivmasse für Lithium-Sekundärbatterien beschrieben. Das Hauptziel dieser Erfindung ist, die kogefällten Mischhydroxide (z.B. bestehend aus Ni, Co, Mn) vor dem eigentlichen Ofenprozess, d.h. vor der Umsetzung zum Lithiummischmetalloxid, thermisch bei 300 - 500°C zu behandeln, um einen trockenen Vorstoff, den sogenannte 'dry precursor' zu erhalten. Dieser 'dry precursor' wird dann mit einer Lithium-Komponente versetzt und durch eine Glühung zum Mischmetalloxid umgesetzt. Wird der beschriebene, getrocknete Vorstoff anstelle eines nicht getrockneten Mischhydroxides eingesetzt, so wird gemäß US 2003/0054251 A1 ein Endprodukt erhalten, welches sich durch eine höhere Produktkonstanz auszeichnet als die Materialien, bei welchen das ungetrocknete Mischhydroxid zum Einsatz kommt.

Die Produktkonstanz der Materialien wurde bestimmt, indem mit jedem Material jeweils zwanzig Batterien gefertigt wurden, und für diese zwanzig Batterien die Variation der Kapazitätsabnahme zwischen dem dritten und dreihundertsten elektrochemischen Zyklus evaluiert wurde.

Der zusätzliche thermische Schritt der Vorstoff-Trocknung' und der beschriebene Einsatz von Lithiumhydroxid anstelle des billigeren Lithiumcarbonates machen das Verfahren jedoch sowohl kompliziert als auch teuer.

WO 2004/092073 A1 befasst sich ebenfalls mit Mischmetall-Vorstoffen für die Synthese von Lithiummischmetalloxid. Wie in der US 2003/0054251 A1 wird hier nach einem idealen Vorstoff für die Synthese dieser Verbindungsklasse gesucht. Die US 200310054251 A1 wird dabei unter anderem als Stand der Technik angeführt. Da die thermische Behandlung des Vorstoffes, wie in US 200310054251 beschrieben, sehr aufwendig ist, und die anschließende Verwendung von LiOH sehr kostspielig ist im Vergleich zu $Li_2CO_3$, wird hier alternativ eine Oxidation des kogefällten Ni-Co-Mn-Hydroxides zu einem Ni-Co-Mn-oxihydroxid vorgeschlagen.

Die Oxidation erfolgt unter Verwendung eines Oxidationsmittels wie gelöster Luft, Natriumhypochlorit, Wasserstoffperoxidlösung, Kaliumperoxodisulfat oder Brom.

Bei den genannten Beispielen ist auffällig, dass ebenfalls ein sehr aufwendiger Prozess eingesetzt wird. Nach der Kofällung des Nickel-Cobalt-Manganhydroxides erfolgt zunächst eine Filtration und dann eine Waschung des Filterrückstandes, um ein gereinigtes Mischmetallhydroxid zu erhalten. Danach wird das Metallhydroxid erneut in einer wässrigen Lösung, die das Oxidationsmittel enthält, aufgeschlämmt und über einen gewissen Zeitraum bei einer bestimmten Temperatur zu einem Nickel-Cobalt-Mangan-Oxihydroxid oxidiert. Danach erfolgt erneut eine Filtration und eine Waschung des erhaltenen Produktes.

Es kann davon ausgegangen werden, dass die erstmalige Waschung durchgeführt wird, weil bei der nachfolgenden Oxidation des Mischhydroxides die Gefahr besteht, dass sich neben einer Beta - NiOOH-Phase auch noch eine Gamma - NiOOH-Phase bildet. Diese Phase weist gegenüber der Beta - NiOOH-Phase eine signifikante Volumenausdehnung aufgrund einer interlaminaren Ausdehnung auf, welche die Einlagerung von Fremdionen wie z.B. $Na^+$, etc. erleichtert. Die interlaminare Ausdehnung ist bereits aus J. Power Sources, 8 (1982), 229 bekannt. Nur durch eine Waschung des Mischhydroxides, wie in der WO 2004/092073A1 vorgeschlagen wird, und anschließender Aufschlämmung in einer wässrigen Phase mit geringer Konzentration an Fremdionen kann vermieden werden, dass ein signifikanter Einbau an Fremdionen in die Kristallgitterstruktur stattfindet. Die Fremdionen wie $Na^+$ werden bei der weiteren Umsetzung des Mischmetallhydroxides zum Lithiummischmetalloxid nicht wieder aus der Kristallgitterstruktur herausgelöst und stellen somit eine Verunreinigung im Endprodukt dar. Insbesondere eingebaut in den späteren Lithium-Schichten kann die Verunreinigung an $Na^+$ signifikant die Diffusion des Lithium behindern und damit das Verhalten des Materials in der Batterie deutlich verschlechtern.

Da die mittlere Wertigkeit der Metalle im Beispiel 1 der WO 2004/092073 A1 mit 2,97 angegeben wird, und da bekannt ist, dass $Mn^{2+}$ wesentlich leichter zu oxidieren ist als $Ni^{2+}$, ist davon auszugehen, daß das Mn partiell zu einer Wertigkeit von vier aufoxidiert wurde und somit für die lokale Bildung von nichtstöchiometrischen Gamma - NiOOH führt.

Die US 2002/0053663 A1 offenbart die kogefällten Nickel-Cobalt-Mangan-Hydroxide, wobei der Schwerpunkt darauf gelegt wird, ein kogefälltes Nickel-Cobalt-Mangan-Hydroxid mit hoher Klopfdichte synthetisieren zu können. Das Hydroxid dient als Vorstoff für die Lithiummischmetalloxide, welches wiederum als Aktivmasse in Lithium-Sekundärbatterien eingesetzt wird. Die Klopfdichte des Lithiummischmetalloxides ist wiederum von großer Bedeutung und wird ganz wesentlich von der Klopfdichte des Vorstoffes beeinflusst. Neben der Klopfdichte wird jedoch nicht auf weitere wichtige Parameter des Mischhydroxides als Vorstoff für Lithiummischmetalloxide eingegangen.

In der US2003/0054251 A1 wird explizit darauf verwiesen, dass es vorteilhaft ist Lithiumhydroxid als Li-Komponente zu verwenden, da sich mit dieser Li-Komponente gegenüber Lithiumcarbonat die Partikelform sowie die Kristallinität besser kontrollieren lassen.

In WO 2004/092073A1 wird aus obiger Problematik die Konsequenz gezogen und das, im Stand der Technik als Vorstoff dienende Mischhydroxid, zu einem Oxihydroxid oxidiert, bevor es als Vorstoff zur Synthese eines Lithiummischmetalloxides zum Einsatz kommt. Dabei wird jedoch ein sehr aufwendiger Syntheseweg eingeschlagen, der entsprechend der genannten Beispiele sowohl zwei Filtrationen als auch zwei Waschungen beinhaltet. Aufgabe der vorliegenden Erfindung ist es daher, eine Mischmetallverbindung als Vorstoff für die Herstellung von Kathodenmaterial für Lithium-Sekundärbatterien zur Verfügung zu stellen, die keine Gamma - Oxihydroxidstrukturen und/oder Alpha - Hydroxidstrukturen aufweist, sich durch hohe Klopfdichte auszeichnet, niedrige Natrium-Gehalte aufweist und die Synthese einer hochwertigen Lithiummischmetallverbindung zulässt Aufgabe der vorliegenden Erfindung ist es weiterhin ein wirtschaftliches Verfahren zur Herstellung partiell oxidierter Mischmetallhydroxide anzugeben.

Die Aufgabe wird gelöst durch eine chemische Verbindung der Formel $Ni_bM1_cM2_d(O)_x(OH)_y$, wobei

M1 mindestens ein Element aus der Gruppe bestehend aus Fe, Co, Mg, Zn, Cu und deren Mischungen,

M2 mindestens ein Element aus der Gruppe Mn, Al, B, Ca, Cr und deren Mischungen bedeuten,

$b \leq 0{,}8$

$c \leq 0,5$

$d \leq 0,5$ ist, und

x eine Zahl zwischen 0,1 bis 0,8,

y eine Zahl zwischen 1,2 und 1,9 ist und die Summe aus x+y=2 ergibt, gelöst.

Vorteilhafte Verbindungen sind chemische Verbindungen der Formel $Ni_bM1_cM2_d(O)_x(OH)_y$, wobei

$0,3 \leq b \leq 0,6$

$0,1 \leq c \leq 0,4$

$0,1 \leq d \leq 0,4$ ist und/oder x eine Zahl zwischen 0,2 und 0,7, und y - eine Zahl zwischen 1,3 und 1,8 ist und die Summe aus x + y = 2 ergibt. Die Summe von b, c und d ist vorzugsweise gleich 1.

Besonders bevorzugte chemische Verbindungen der Formel $Ni_bM1_cM2_d(O)_x(OH)_y$, wobei x eine Zahl zwischen 0,3 und 0,6 und y eine Zahl zwischen 1,4 und 1,7 ist.

Verbindungen, welche Teil der Erfindung sind, werden in den folgenden Tabellen 1 bis 17 aufgeführt. Einzelverbindungen werden mit der Nummer der Tabelle bezeichnet, gefolgt von der Nummer der Kombination der Variablen M1, M2, b und c wie in Tabelle 1. Beispielsweise ist Verbindung 14.022 die Verbindung wie beschrieben in Tabelle 14, wobei die dort definierte Variable x kombiniert wird mit der Kombination der Variablen M1, M2, b und c wie in Tabelle 1, Position Nr. 022. In den Tabellen 1 bis 17 besitzen die Verbindungen die allgemeine Formel $Ni_bM1_cM2_c(O)_x(OH)_y$, mit y= 2-x und d=1-b-c.

Tabelle 1:

| Nr. | M1 | M2 | b | c |
|-----|-----|-----|-------|------|
| 001 | Co | Mn | 0,333 | 0,05 |
| 002 | Co | Mn | 0,375 | 0,05 |
| 003 | Co | Mn | 0,475 | 0,05 |
| 004 | Co | Mn | 0,5 | 0,05 |
| 005 | Co | Mn | 0,55 | 0,05 |
| 006 | Co | Mn | 0,65 | 0,05 |
| 007 | Co | Mn | 0,7 | 0,05 |
| 008 | Co | Mn | 0,75 | 0,05 |
| 009 | Co | Mn | 0,77 | 0,05 |
| 010 | Co | Mn | 0,333 | 0,13 |
| 011 | Co | Mn | 0,375 | 0,13 |
| 012 | Co | Mn | 0,475 | 0,13 |
| 013 | Co | Mn | 0,5 | 0,13 |
| 014 | Co | Mn | 0,55 | 0,13 |
| 015 | Co | Mn | 0,65 | 0,13 |
| 016 | Co | Mn | 0,7 | 0,13 |
| 017 | Co | Mn | 0,75 | 0,13 |
| 018 | Co | Mn | 0,77 | 0,13 |
| 019 | Co | Mn | 0,333 | 0,15 |
| 020 | Co | Mn | 0,375 | 0,15 |
| 021 | Co | Mn | 0,475 | 0,15 |
| 022 | Co | Mn | 0,5 | 0,15 |
| 023 | Co | Mn | 0,55 | 0,15 |
| 024 | Co | Mn | 0,65 | 0,15 |
| 025 | Co | Mn | 0,7 | 0,15 |

(fortgesetzt)

| Nr. | M1 | M2 | b | c |
|-----|----|----|------|------|
| 026 | Co | Mn | 0,75 | 0,15 |
| 027 | Co | Mn | 0,77 | 0,15 |
| 028 | Co | Mn | 0,333 | 0,20 |
| 029 | Co | Mn | 0,375 | 0,20 |
| 030 | Co | Mn | 0,475 | 0,20 |
| 031 | Co | Mn | 0,5 | 0,20 |
| 032 | Co | Mn | 0,55 | 0,20 |
| 033 | Co | Mn | 0,65 | 0,20 |
| 034 | Co | Mn | 0,7 | 0,20 |
| 035 | Co | Mn | 0,75 | 0,20 |
| 036 | Co | Mn | 0,77 | 0,20 |
| 037 | Co | Mn | 0,333 | 0,25 |
| 038 | Co | Mn | 0,375 | 0,25 |
| 039 | Co | Mn | 0,475 | 0,25 |
| 040 | Co | Mn | 0,5 | 0,25 |
| 041 | Co | Mn | 0,55 | 0,25 |
| 042 | Co | Mn | 0,65 | 0,25 |
| 043 | Co | Mn | 0,7 | 0,25 |
| 044 | Co | Mn | 0,75 | 0,25 |
| 045 | Co | Mn | 0,77 | 0,23 |
| 046 | Co | Mn | 0,333 | 0,333 |
| 047 | Co | Mn | 0,375 | 0,333 |
| 048 | Co | Mn | 0,475 | 0,333 |
| 049 | Co | Mn | 0,5 | 0,333 |
| 050 | Co | Mn | 0,55 | 0,333 |
| 051 | Co | Mn | 0,65 | 0,333 |
| 052 | Co | Mn | 0,7 | 0,10 |
| 053 | Co | Mn | 0,75 | 0,10 |
| 054 | Co | Mn | 0,77 | 0,10 |
| 055 | Co | Cr | 0,333 | 0,05 |
| 056 | Co | Cr | 0,375 | 0,05 |
| 057 | Co | Cr | 0,475 | 0,05 |
| 058 | Co | Cr | 0,5 | 0,05 |
| 059 | Co | Cr | 0,55 | 0,05 |
| 060 | Co | Cr | 0,65 | 0,05 |
| 061 | Co | Cr | 0,7 | 0,05 |
| 062 | Co | Cr | 0,75 | 0,05 |
| 063 | Co | Cr | 0,77 | 0,05 |

(fortgesetzt)

| Nr. | M1 | M2 | b | c |
|---|---|---|---|---|
| 064 | Co | Cr | 0,333 | 0,13 |
| 065 | Co | Cr | 0,375 | 0,13 |
| 066 | Co | Cr | 0,475 | 0,13 |
| 067 | Co | Cr | 0,5 | 0,13 |
| 068 | Co | Cr | 0,55 | 0,13 |
| 069 | Co | Cr | 0,65 | 0,13 |
| 070 | Co | Cr | 0,7 | 0,13 |
| 071 | Co | Cr | 0,75 | 0,13 |
| 072 | Co | Cr | 0,77 | 0,13 |
| 073 | Co | Cr | 0,333 | 0,15 |
| 074 | Co | Cr | 0,375 | 0,15 |
| 075 | Co | Cr | 0,475 | 0,15 |
| 076 | Co | Cr | 0,5 | 0,15 |
| 077 | Co | Cr | 0,55 | 0,15 |
| 078 | Co | Cr | 0,65 | 0,15 |
| 079 | Co | Cr | 0,7 | 0,15 |
| 080 | Co | Cr | 0,75 | 0,15 |
| 081 | Co | Cr | 0,77 | 0,15 |
| 082 | Co | Cr | 0,333 | 0,20 |
| 083 | Co | Cr | 0,375 | 0,20 |
| 084 | Co | Cr | 0,475 | 0,20 |
| 085 | Co | Cr | 0,5 | 0,20 |
| 086 | Co | Cr | 0,55 | 0,20 |
| 087 | Co | Cr | 0,65 | 0,20 |
| 088 | Co | Cr | 0,7 | 0,20 |
| 089 | Co | Cr | 0,75 | 0,20 |
| 090 | Co | Cr | 0,77 | 0,20 |
| 091 | Co | Cr | 0,333 | 0,25 |
| 092 | Co | Cr | 0,375 | 0,25 |
| 093 | Co | Cr | 0,475 | 0,25 |
| 094 | Co | Cr | 0,5 | 0,25 |
| 095 | Co | Cr | 0,55 | 0,25 |
| 096 | Co | Cr | 0,65 | 0,25 |
| 097 | Co | Cr | 0,7 | 0,25 |
| 098 | Co | Cr | 0,75 | 0,25 |
| 099 | Co | Cr | 0,77 | 0,23 |
| 100 | Co | Cr | 0,333 | 0,333 |
| 101 | Co | Cr | 0,375 | 0,333 |

(fortgesetzt)

| Nr. | M1 | M2 | b | c |
|-----|-----|-----|-------|-------|
| 102 | Co | Cr | 0,475 | 0,333 |
| 103 | Co | Cr | 0,5 | 0,333 |
| 104 | Co | Cr | 0,55 | 0,333 |
| 105 | Co | Cr | 0,65 | 0,333 |
| 106 | Co | Cr | 0,7 | 0,10 |
| 107 | Co | Cr | 0,75 | 0,10 |
| 108 | Co | Cr | 0,77 | 0,10 |
| 109 | Mg | Mn | 0,333 | 0,05 |
| 110 | Mg | Mn | 0,375 | 0,05 |
| 111 | Mg | Mn | 0,475 | 0,05 |
| 112 | Mg | Mn | 0,5 | 0,05 |
| 113 | Mg | Mn | 0,55 | 0,05 |
| 114 | Mg | Mn | 0,65 | 0,05 |
| 115 | Mg | Mn | 0,7 | 0,05 |
| 116 | Mg | Mn | 0,75 | 0,05 |
| 117 | Mg | Mn | 0,77 | 0,05 |
| 118 | Mg | Mn | 0,333 | 0,13 |
| 119 | Mg | Mn | 0,375 | 0,13 |
| 120 | Mg | Mn | 0,475 | 0,13 |
| 121 | Mg | Mn | 0,5 | 0,13 |
| 122 | Mg | Mn | 0,55 | 0,13 |
| 123 | Mg | Mn | 0,65 | 0,13 |
| 124 | Mg | Mn | 0,7 | 0,13 |
| 125 | Mg | Mn | 0,75 | 0,13 |
| 126 | Mg | Mn | 0,77 | 0,13 |
| 127 | Mg | Mn | 0,333 | 0,15 |
| 128 | Mg | Mn | 0,375 | 0,15 |
| 129 | Mg | Mn | 0,475 | 0,15 |
| 130 | Mg | Mn | 0,5 | 0,15 |
| 131 | Mg | Mn | 0,55 | 0,15 |
| 132 | Mg | Mn | 0,65 | 0,15 |
| 133 | Mg | Mn | 0,7 | 0,15 |
| 134 | Mg | Mn | 0,75 | 0,15 |
| 135 | Mg | Mn | 0,77 | 0,15 |
| 136 | Mg | Mn | 0,333 | 0,20 |
| 137 | Mg | Mn | 0,375 | 0,20 |
| 138 | Mg | Mn | 0,475 | 0,20 |
| 139 | Mg | Mn | 0,5 | 0,20 |

(fortgesetzt)

| Nr. | M1 | M2 | b | c |
|---|---|---|---|---|
| 140 | Mg | Mn | 0,55 | 0,20 |
| 141 | Mg | Mn | 0,65 | 0,20 |
| 142 | Mg | Mn | 0,7 | 0,20 |
| 143 | Mg | Mn | 0,75 | 0,20 |
| 144 | Mg | Mn | 0,77 | 0,20 |
| 145 | Mg | Mn | 0,333 | 0,25 |
| 146 | Mg | Mn | 0,375 | 0,25 |
| 147 | Mg | Mn | 0,475 | 0,25 |
| 148 | Mg | Mn | 0,5 | 0,25 |
| 149 | Mg | Mn | 0,55 | 0,25 |
| 150 | Mg | Mn | 0,65 | 0,25 |
| 151 | Mg | Mn | 0,7 | 0,25 |
| 152 | Mg | Mn | 0,75 | 0,25 |
| 153 | Mg | Mn | 0,77 | 0,23 |
| 154 | Mg | Mn | 0,333 | 0,333 |
| 155 | Mg | Mn | 0,375 | 0,333 |
| 156 | Mg | Mn | 0,475 | 0,333 |
| 157 | Mg | Mn | 0,5 | 0,333 |
| 158 | Mg | Mn | 0,55 | 0,333 |
| 159 | Mg | Mn | 0,65 | 0,333 |
| 160 | Mg | Mn | 0,7 | 0,10 |
| 161 | Mg | Mn | 0,75 | 0,10 |
| 162 | Mg | Mn | 0,77 | 0,10 |
| 163 | Mg | Cr | 0,333 | 0,05 |
| 164 | Mg | Cr | 0,375 | 0,05 |
| 165 | Mg | Cr | 0,475 | 0,05 |
| 166 | Mg | Cr | 0,5 | 0,05 |
| 167 | Mg | Cr | 0,55 | 0,05 |
| 168 | Mg | Cr | 0,65 | 0,05 |
| 169 | Mg | Cr | 0,7 | 0,05 |
| 170 | Mg | Cr | 0,75 | 0,05 |
| 171 | Mg | Cr | 0,77 | 0,05 |
| 172 | Mg | Cr | 0,333 | 0,13 |
| 173 | Mg | Cr | 0,375 | 0,13 |
| 174 | Mg | Cr | 0,475 | 0,13 |
| 175 | Mg | Cr | 0,5 | 0,13 |
| 176 | Mg | Cr | 0,55 | 0,13 |
| 177 | Mg | Cr | 0,65 | 0,13 |

(fortgesetzt)

| Nr. | M1 | M2 | b | c |
|---|---|---|---|---|
| 178 | Mg | Cr | 0,7 | 0,13 |
| 179 | Mg | Cr | 0,75 | 0,13 |
| 180 | Mg | Cr | 0,77 | 0,13 |
| 181 | Mg | Cr | 0,333 | 0,15 |
| 182 | Mg | Cr | 0,375 | 0,15 |
| 183 | Mg | Cr | 0,475 | 0,15 |
| 184 | Mg | Cr | 0,5 | 0,15 |
| 185 | Mg | Cr | 0,55 | 0,15 |
| 186 | Mg | Cr | 0,65 | 0,15 |
| 187 | Mg | Cr | 0,7 | 0,15 |
| 188 | Mg | Cr | 0,75 | 0,15 |
| 189 | Mg | Cr | 0,77 | 0,15 |
| 190 | Mg | Cr | 0,333 | 0,20 |
| 191 | Mg | Cr | 0,375 | 0,20 |
| 192 | Mg | Cr | 0,475 | 0,20 |
| 193 | Mg | Cr | 0,5 | 0,20 |
| 194 | Mg | Cr | 0,55 | 0,20 |
| 195 | Mg | Cr | 0,65 | 0,20 |
| 196 | Mg | Cr | 0,7 | 0,20 |
| 197 | Mg | Cr | 0,75 | 0,20 |
| 198 | Mg | Cr | 0,77 | 0,20 |
| 199 | Mg | Cr | 0,333 | 0,25 |
| 200 | Mg | Cr | 0,375 | 0,25 |
| 201 | Mg | Cr | 0,475 | 0,25 |
| 202 | Mg | Cr | 0,5 | 0,25 |
| 203 | Mg | Cr | 0,55 | 0,25 |
| 204 | Mg | Cr | 0,65 | 0,25 |
| 205 | Mg | Cr | 0,7 | 0,25 |
| 206 | Mg | Cr | 0,75 | 0,25 |
| 207 | Mg | Cr | 0,77 | 0,23 |
| 208 | Mg | Cr | 0,333 | 0, 333 |
| 209 | Mg | Cr | 0,375 | 0,333 |
| 210 | Mg | Cr | 0,475 | 0,333 |
| 211 | Mg | Cr | 0,5 | 0,333 |
| 212 | Mg | Cr | 0,55 | 0,333 |
| 213 | Mg | Cr | 0,65 | 0,333 |
| 214 | Mg | Cr | 0,7 | 0,10 |
| 215 | Mg | Cr | 0,75 | 0,10 |

(fortgesetzt)

| Nr. | M1 | M2 | b | c |
|-----|-----|-----|-------|------|
| 216 | Mg | Cr | 0,77 | 0,10 |
| 217 | Zn | Mn | 0,333 | 0,05 |
| 218 | Zn | Mn | 0,375 | 0,05 |
| 219 | Zn | Mn | 0,475 | 0,05 |
| 220 | Zn | Mn | 0,5 | 0,05 |
| 221 | Zn | Mn | 0,55 | 0,05 |
| 222 | Zn | Mn | 0,65 | 0,05 |
| 223 | Zn | Mn | 0,7 | 0,05 |
| 224 | Zn | Mn | 0,75 | 0,05 |
| 225 | Zn | Mn | 0,77 | 0,05 |
| 226 | Zn | Mn | 0,333 | 0,13 |
| 227 | Zn | Mn | 0,375 | 0,13 |
| 228 | Zn | Mn | 0,475 | 0,13 |
| 229 | Zn | Mn | 0,5 | 0,13 |
| 230 | Zn | Mn | 0,55 | 0,13 |
| 231 | Zn | Mn | 0,65 | 0,13 |
| 232 | Zn | Mn | 0,7 | 0,13 |
| 233 | Zn | Mn | 0,75 | 0,13 |
| 234 | Zn | Mn | 0,77 | 0,13 |
| 235 | Zn | Mn | 0,333 | 0,15 |
| 236 | Zn | Mn | 0,375 | 0,15 |
| 237 | Zn | Mn | 0,475 | 0,15 |
| 238 | Zn | Mn | 0,5 | 0,15 |
| 239 | Zn | Mn | 0,55 | 0,15 |
| 240 | Zn | Mn | 0,65 | 0,15 |
| 241 | Zn | Mn | 0,7 | 0,15 |
| 242 | Zn | Mn | 0,75 | 0,15 |
| 243 | Zn | Mn | 0,77 | 0,15 |
| 244 | Zn | Mn | 0,333 | 0,20 |
| 245 | Zn | Mn | 0,375 | 0,20 |
| 246 | Zn | Mn | 0,475 | 0,20 |
| 247 | Zn | Mn | 0,5 | 0,20 |
| 248 | Zn | Mn | 0,55 | 0,20 |
| 249 | Zn | Mn | 0,65 | 0,20 |
| 250 | Zn | Mn | 0,7 | 0,20 |
| 251 | Zn | Mn | 0,75 | 0,20 |
| 252 | Zn | Mn | 0,77 | 0,20 |
| 253 | Zn | Mn | 0,333 | 0,25 |

(fortgesetzt)

| Nr. | M1 | M2 | b | c |
|-----|----|----|----|----|
| 254 | Zn | Mn | 0,375 | 0,25 |
| 255 | Zn | Mn | 0,475 | 0,25 |
| 256 | Zn | Mn | 0,5 | 0,25 |
| 257 | Zn | Mn | 0,55 | 0,25 |
| 258 | Zn | Mn | 0,65 | 0,25 |
| 259 | Zn | Mn | 0,7 | 0,25 |
| 260 | Zn | Mn | 0,75 | 0,25 |
| 261 | Zn | Mn | 0,77 | 0,23 |
| 262 | Zn | Mn | 0,333 | 0,333 |
| 263 | Zn | Mn | 0,375 | 0,333 |
| 264 | Zn | Mn | 0,475 | 0,333 |
| 265 | Zn | Mn | 0,5 | 0,333 |
| 266 | Zn | Mn | 0,55 | 0,333 |
| 267 | Zn | Mn | 0,65 | 0,333 |
| 268 | Zn | Mn | 0,7 | 0,10 |
| 269 | Zn | Mn | 0,75 | 0,10 |
| 270 | Zn | Mn | 0,77 | 0,10 |
| 271 | Zn | Cr | 0,333 | 0,05 |
| 272 | Zn | Cr | 0,375 | 0,05 |
| 273 | Zn | Cr | 0,475 | 0,05 |
| 274 | Zn | Cr | 0,5 | 0,05 |
| 275 | Zn | Cr | 0,55 | 0,05 |
| 276 | Zn | Cr | 0,65 | 0,05 |
| 277 | Zn | Cr | 0,7 | 0,05 |
| 278 | Zn | Cr | 0,75 | 0,05 |
| 279 | Zn | Cr | 0,77 | 0,05 |
| 280 | Zn | Cr | 0,333 | 0,13 |
| 281 | Zn | Cr | 0,375 | 0,13 |
| 282 | Zn | Cr | 0,475 | 0,13 |
| 283 | Zn | Cr | 0,5 | 0,13 |
| 284 | Zn | Cr | 0,55 | 0,13 |
| 285 | Zn | Cr | 0,65 | 0,13 |
| 286 | Zn | Cr | 0,7 | 0,13 |
| 287 | Zn | Cr | 0,75 | 0,13 |
| 288 | Zn | Cr | 0,77 | 0,13 |
| 289 | Zn | Cr | 0,333 | 0,15 |
| 290 | Zn | Cr | 0,375 | 0,15 |
| 291 | Zn | Cr | 0,475 | 0,15 |

(fortgesetzt)

| Nr. | M1 | M2 | b | c |
|-----|-----|-----|-------|-------|
| 292 | Zn | Cr | 0,5 | 0,15 |
| 293 | Zn | Cr | 0,55 | 0,15 |
| 294 | Zn | Cr | 0,65 | 0,15 |
| 295 | Zn | Cr | 0,7 | 0,15 |
| 296 | Zn | Cr | 0,75 | 0,15 |
| 297 | Zn | Cr | 0,77 | 0,15 |
| 298 | Zn | Cr | 0,333 | 0,20 |
| 299 | Zn | Cr | 0,375 | 0,20 |
| 300 | Zn | Cr | 0,475 | 0,20 |
| 301 | Zn | Cr | 0,5 | 0,20 |
| 302 | Zn | Cr | 0,55 | 0,20 |
| 303 | Zn | Cr | 0,65 | 0,20 |
| 304 | Zn | Cr | 0,7 | 0,20 |
| 305 | Zn | Cr | 0,75 | 0,20 |
| 306 | Zn | Cr | 0,77 | 0,20 |
| 307 | Zn | Cr | 0,333 | 0,25 |
| 308 | Zn | Cr | 0,375 | 0,25 |
| 309 | Zn | Cr | 0,475 | 0,25 |
| 310 | Zn | Cr | 0,5 | 0,25 |
| 311 | Zn | Cr | 0,55 | 0,25 |
| 312 | Zn | Cr | 0,65 | 0,25 |
| 313 | Zn | Cr | 0,7 | 0,25 |
| 314 | Zn | Cr | 0,75 | 0,25 |
| 315 | Zn | Cr | 0,77 | 0,23 |
| 316 | Zn | Cr | 0,333 | 0,333 |
| 317 | Zn | Cr | 0,375 | 0,333 |
| 318 | Zn | Cr | 0,475 | 0,333 |
| 319 | Zn | Cr | 0,5 | 0,333 |
| 320 | Zn | Cr | 0,55 | 0,333 |
| 321 | Zn | Cr | 0,65 | 0,333 |
| 322 | Zn | Cr | 0,7 | 0,10 |
| 323 | Zn | Cr | 0,75 | 0,10 |
| 324 | Zn | Cr | 0,77 | 0,10 |
| 325 | Cu | Mn | 0,333 | 0,05 |
| 326 | Cu | Mn | 0,375 | 0,05 |
| 327 | Cu | Mn | 0,475 | 0,05 |
| 328 | Cu | Mn | 0,5 | 0,05 |
| 329 | Cu | Mn | 0,55 | 0,05 |

(fortgesetzt)

| Nr. | M1 | M2 | b | c |
|-----|----|----|-----|------|
| 330 | Cu | Mn | 0,65 | 0,05 |
| 331 | Cu | Mn | 0,7 | 0,05 |
| 332 | Cu | Mn | 0,75 | 0,05 |
| 333 | Cu | Mn | 0,77 | 0,05 |
| 334 | Cu | Mn | 0,333 | 0,13 |
| 335 | Cu | Mn | 0,375 | 0,13 |
| 336 | Cu | Mn | 0,475 | 0,13 |
| 337 | Cu | Mn | 0,5 | 0,13 |
| 338 | Cu | Mn | 0,55 | 0,13 |
| 339 | Cu | Mn | 0,65 | 0,13 |
| 340 | Cu | Mn | 0,7 | 0,13 |
| 341 | Cu | Mn | 0,75 | 0,13 |
| 342 | Cu | Mn | 0,77 | 0,13 |
| 343 | Cu | Mn | 0,333 | 0,15 |
| 344 | Cu | Mn | 0,375 | 0,15 |
| 345 | Cu | Mn | 0,475 | 0,15 |
| 346 | Cu | Mn | 0,5 | 0,15 |
| 347 | Cu | Mn | 0,55 | 0,15 |
| 348 | Cu | Mn | 0,65 | 0,15 |
| 349 | Cu | Mn | 0,7 | 0,15 |
| 350 | Cu | Mn | 0,75 | 0,15 |
| 351 | Cu | Mn | 0,77 | 0,15 |
| 352 | Cu | Mn | 0,333 | 0,20 |
| 353 | Cu | Mn | 0,375 | 0,20 |
| 354 | Cu | Mn | 0,475 | 0,20 |
| 355 | Cu | Mn | 0,5 | 0,20 |
| 356 | Cu | Mn | 0,55 | 0,20 |
| 357 | Cu | Mn | 0,65 | 0,20 |
| 358 | Cu | Mn | 0,7 | 0,20 |
| 359 | Cu | Mn | 0,75 | 0,20 |
| 360 | Cu | Mn | 0,77 | 0,20 |
| 361 | Cu | Mn | 0,333 | 0,25 |
| 362 | Cu | Mn | 0,375 | 0,25 |
| 363 | Cu | Mn | 0,475 | 0,25 |
| 364 | Cu | Mn | 0,5 | 0,25 |
| 365 | Cu | Mn | 0,55 | 0,25 |
| 366 | Cu | Mn | 0,65 | 0,25 |
| 367 | Cu | Mn | 0,7 | 0,25 |

(fortgesetzt)

| Nr. | M1 | M2 | b | c |
|---|---|---|---|---|
| 368 | Cu | Mn | 0,75 | 0,25 |
| 369 | Cu | Mn | 0,77 | 0,23 |
| 370 | Cu | Mn | 0,333 | 0,333 |
| 371 | Cu | Mn | 0,375 | 0,333 |
| 372 | Cu | Mn | 0,475 | 0,333 |
| 373 | Cu | Mn | 0,5 | 0,333 |
| 374 | Cu | Mn | 0,55 | 0,333 |
| 375 | Cu | Mn | 0,65 | 0,333 |
| 376 | Cu | Mn | 0,7 | 0,10 |
| 377 | Cu | Mn | 0,75 | 0,10 |
| 378 | Cu | Mn | 0,77 | 0,10 |
| 379 | Cu | Cr | 0,333 | 0,05 |
| 380 | Cu | Cr | 0,375 | 0,05 |
| 381 | Cu | Cr | 0,475 | 0,05 |
| 382 | Cu | Cr | 0,5 | 0,05 |
| 383 | Cu | Cr | 0,55 | 0,05 |
| 384 | Cu | Cr | 0,65 | 0,05 |
| 385 | Cu | Cr | 0,7 | 0,05 |
| 386 | Cu | Cr | 0,75 | 0,05 |
| 387 | Cu | Cr | 0,77 | 0,05 |
| 388 | Cu | Cr | 0,333 | 0,13 |
| 389 | Cu | Cr | 0,375 | 0,13 |
| 390 | Cu | Cr | 0,475 | 0,13 |
| 391 | Cu | Cr | 0,5 | 0,13 |
| 392 | Cu | Cr | 0,55 | 0,13 |
| 393 | Cu | Cr | 0,65 | 0,13 |
| 394 | Cu | Cr | 0,7 | 0,13 |
| 395 | Cu | Cr | 0,75 | 0,13 |
| 396 | Cu | Cr | 0,77 | 0,13 |
| 397 | Cu | Cr | 0,333 | 0,15 |
| 398 | Cu | Cr | 0,375 | 0,15 |
| 399 | Cu | Cr | 0,475 | 0,15 |
| 400 | Cu | Cr | 0,5 | 0,15 |
| 401 | Cu | Cr | 0,55 | 0,15 |
| 402 | Cu | Cr | 0,65 | 0,15 |
| 403 | Cu | Cr | 0,7 | 0,15 |
| 404 | Cu | Cr | 0,75 | 0,15 |
| 405 | Cu | Cr | 0,77 | 0,15 |

(fortgesetzt)

| Nr. | M1 | M2 | b | c |
|-----|-----|-----|-------|-------|
| 406 | Cu | Cr | 0,333 | 0,20 |
| 407 | Cu | Cr | 0,375 | 0,20 |
| 408 | Cu | Cr | 0,475 | 0,20 |
| 409 | Cu | Cr | 0,5 | 0,20 |
| 410 | Cu | Cr | 0,55 | 0,20 |
| 411 | Cu | Cr | 0,65 | 0,20 |
| 412 | Cu | Cr | 0,7 | 0,20 |
| 413 | Cu | Cr | 0,75 | 0,20 |
| 414 | Cu | Cr | 0,77 | 0,20 |
| 415 | Cu | Cr | 0,333 | 0,25 |
| 416 | Cu | Cr | 0,375 | 0,25 |
| 417 | Cu | Cr | 0,475 | 0,25 |
| 418 | Cu | Cr | 0,5 | 0,25 |
| 419 | Cu | Cr | 0,55 | 0,25 |
| 420 | Cu | Cr | 0,65 | 0,25 |
| 421 | Cu | Cr | 0,7 | 0,25 |
| 422 | Cu | Cr | 0,75 | 0,25 |
| 423 | Cu | Cr | 0,77 | 0,23 |
| 424 | Cu | Cr | 0,333 | 0,333 |
| 425 | Cu | Cr | 0,375 | 0,333 |
| 426 | Cu | Cr | 0,475 | 0,333 |
| 427 | Cu | Cr | 0,5 | 0,333 |
| 428 | Cu | Cr | 0,55 | 0,333 |
| 429 | Cu | Cr | 0,65 | 0,333 |
| 430 | Cu | Cr | 0,7 | 0,10 |
| 431 | Cu | Cr | 0,75 | 0,10 |
| 432 | Cu | Cr | 0,77 | 0,10 |

Tabelle 2:

Tabelle 2 besteht aus 432 Verbindungen der Formel $Ni_bM1_eM2_d(O)_x(OH)_y$, mit y= 2-x und d=1-b-c und x=0,13, wobei die Werte der Variablen M1, M2, b und c in Tabelle 1 aufgeführt sind.

Tabelle 3:

Tabelle 3 besteht aus 432 Verbindungen der Formel $Ni_bM1_cM2_d(O)_x(OH)_y$, mit y= 2-x und d=1-b-c und x=0,15, wobei die Werte der Variablen M1, M2, b und c in Tabelle 1 aufgeführt sind.

Tabelle 4:

Tabelle 4 besteht aus 432 Verbindungen der Formel $Ni_bM1_cM2_d(O)_x(OH)_y$, mit y= 2-x und d=1-b-c und x=0,17, wobei die Werte der Variablen M1, M2, b und c in Tabelle 1 aufgeführt sind.

Tabelle 5:

Tabelle 5 besteht aus 432 Verbindungen der Formel $Ni_bM1_cM2_d(O)_x(OH)_y$, mit y= 2-x und d=1-b-c und x=0,21, wobei die Werte der Variablen M1, M2, b und c in Tabelle 1 aufgeführt sind.

Tabelle 6:

Tabelle 6 besteht aus 432 Verbindungen der Formel $Ni_bM1_cM2_d(O)_x(OH)_y$, mit y= 2-x und d=1-b-c und x=0,22, wobei die Werte der Variablen M1, M2, b und c in Tabelle 1 aufgeführt sind.

Tabelle 7:

Tabelle 7 besteht aus 432 Verbindungen der Formel $Ni_bM1_cM2_d(O)_x(OH)_y$, mit y= 2-x und d=1-b-c und x=0,23, wobei die Werte der Variablen M1, M2, b und c in Tabelle 1 aufgeführt sind.

Tabelle 8:

Tabelle 8 besteht aus 432 Verbindungen der Formel $Ni_bM1_cM2_d(O)_x(OH)_y$, mit y= 2-x und d=1-b-c und x=0,26, wobei die Werte der Variablen M1, M2, b und c in Tabelle 1 aufgeführt sind.

Tabelle 9:

Tabelle 9 besteht aus 432 Verbindungen der Formel $Ni_bM1_cM2_d(O)_x(OH)_y$, mit y= 2-x und d=1-b-c und x=0,28, wobei die Werte der Variablen M1, M2, b und c in Tabelle 1 aufgeführt sind.

Tabelle 10:

Tabelle 10 besteht aus 432 Verbindungen der Formel $Ni_bM1_cM2_d(O)_x(OH)_y$, mit y= 2-x und d=1-b-c und x=0,30, wobei die Werte der Variablen M1, M2, b und c in Tabelle 1 aufgeführt sind.

Tabelle 11:

Tabellen 11 besteht aus 432 Verbindungen der Formel $Ni_bM1_cM2_d(O)_x(OH)_y$, mit y= 2-x und d=1-b-c und x=0,37, wobei die Werte der Variablen M1, M2, b und c in Tabelle 1 aufgeführt sind.

Tabelle 12:

Tabelle 12 besteht aus 432 Verbindungen der Formel $Ni_bM1_cM2_d(O)_x(OH)_y$, mit y= 2-x und d=1-b-c und x=0,4, wobei die Werte der Variablen M1, M2, b und c in Tabelle 1 aufgeführt sind.

Tabelle 13:

Tabelle 13 besteht aus 432 Verbindungen der Formel $Ni_bM1_cM2_d(O)_x(OH)_y$, mit y= 2-x und d=1-b-c und x=0,42, wobei die Werte der Variablen M1, M2, b und c in Tabelle 1 aufgeführt sind.

Tabelle 14:

Tabelle 14 besteht aus 432 Verbindungen der Formel $Ni_bM1_cM2_d(O)_x(OH)_y$, mit y= 2-x und d=1-b-c und x=0,48, wobei die Werte der Variablen M1, M2, b und c in Tabelle 1 aufgeführt sind.

Tabelle 15:

Tabelle 15 besteht aus 432 Verbindungen der Formel $Ni_bM1_cM2_d(O)_x(OH)_y$, mit y= 2-x und d=1-b-c und x=0,5, wobei die Werte der Variablen M1, M2, b und c in Tabelle 1 aufgeführt sind.

Tabelle 16:

Tabelle 16 besteht aus 432 Verbindungen der Formel $Ni_bM1_cM2_d(O)_x(OH)_y$, mit y= 2-x und d=1-b-c und x=0,6, wobei die Werte der Variablen M1, M2, b und c in Tabelle 1 aufgeführt sind.

Tabelle 17:

Tabelle 17 besteht aus 432 Verbindungen der Formel $Ni_bM1_cM2_d(O)_x(OH)_y$, mit y= 2-x und d=1-b-c und x=0,69, wobei die Werte der Variablen M1, M2, b und c in Tabelle 1 aufgeführt sind.

Bei den chemischen Verbindungen gemäß der Erfindung handelt es sich um partiell oxidierte Mischmetallhydroxide, später auch Vorstoff(e) genannt.

Die in den erfindungsgemäßen partiell oxidierten Mischmetallhydroxiden angegebenen Parameter x und y definieren eindeutig den mittleren Oxidationsgrad über alle metallischen Komponenten des Mischmetallhydroxides. Es wurde nun gefunden, daß die partiell oxidierten Mischmetallhydroxide mit einem mittleren Oxidationsgrad von 2,1 bis 2,8 sich besonders gut zu Endprodukten der allgemeinen Formel $Li_aNi_bM1_cM2_d(O)_2$, wobei M1 mindestens ein Element ausgewählt aus der Gruppe bestehend aus Fe, Co, Mg, Zn, Cu und deren Mischungen und/oder M2 mindestens ein Element der Gruppe Mn, Al, B, Ca, Cr bedeuten, der Index a ist 0.95<=a<=1,15, insbesondere ist a 0,98<=a<=1,10, die Indices b, c und d sind weiter oben definiert, verarbeiten lassen, die eine wesentlich bessere Zyklenstabilität, ein verbessertes Lade- /Entladeverhalten in den Lithium-Sekundärbatterien, sowie eine höhere Klopfdichte und ein besonders gutes Siebverhalten aufweisen. Diese Verbindungen der allgemeinen Formel $Li_aNi_bM1_cM2_d(O)_2$ werden im Folgenden auch Endprodukt genannt.

Der mittlere Oxidationsgrad gilt auch als Indikator für die Beurteilung der Qualität des Vorstoffes für Lithium-Sekundärbatterien. Es ist daher eine genaue Einstellung dieses Parameters während des Herstellungsprozesses erforderlich.

Überraschenderweise hat sich gezeigt, daß der mittlere Oxidationsgrad des erfindungsgemäßen partiell oxidierten Mischmetallhydroxides nicht unterschritten werden darf, um eine gute Weiterverarbeitbarkeit und letztlich eine gute Qualität des Endproduktes zu gewährleisten. Es hat sich auch gezeigt, daß der mittlere Oxidationsgrad nicht zu hoch werden darf, da bei zu hohen Oxidationsgraden verstärkt eine Nebenphase, wie ein Gamma-Oxihydroxid im Vorstoff auftreten kann. Die Anwesenheit der Gamma-Phase neben der gewünschten Beta-Phase bedeutet eine Inhomogenität des Vorstoffes und beeinflusst schließlich auch die Homogenität des daraus erhältlichen Endproduktes. Aufgrund der interlaminaren Extension des Kristallgitters gegenüber der Beta-Phase fördert die Existenz einer Gamma-Phase des weiteren die unerwünschte Inklusion von ionischen Verunreinigungen.

Bevorzugt beträgt der mittlere Oxidationsgrad 2,2 bis 2,7, besonders bevorzugt 2,3 bis 2,6.

Die Bestimmung des mittleren Oxidationsgrades über alle metallischen Komponenten beruht auf dem Verfahren der Braunsteinbestimmung nach Rupp.

Der mittels der genannten Methode bestimmte Oxidationsgrad stellt die Grundlage für die Evaluierung der Summenformel der vorliegenden chemischen Verbindung dar.

Zwischen dem Index x und dem Oxidationsgrad α besteht der folgende, quantitative Zusammenhang:

$$\alpha = x + 2$$

Das bedeutet z.B., daß im Falle einer mittleren Oxidationsstufe über alle Metalle von +2,5 sich für den Index x ein Wert von (2,5 - 2) = 0,5 ergibt, was zu einer Summenformel wie beispielsweise

$$NiCoMn(O)_{0,5}(OH)_{1.5}$$

führt.

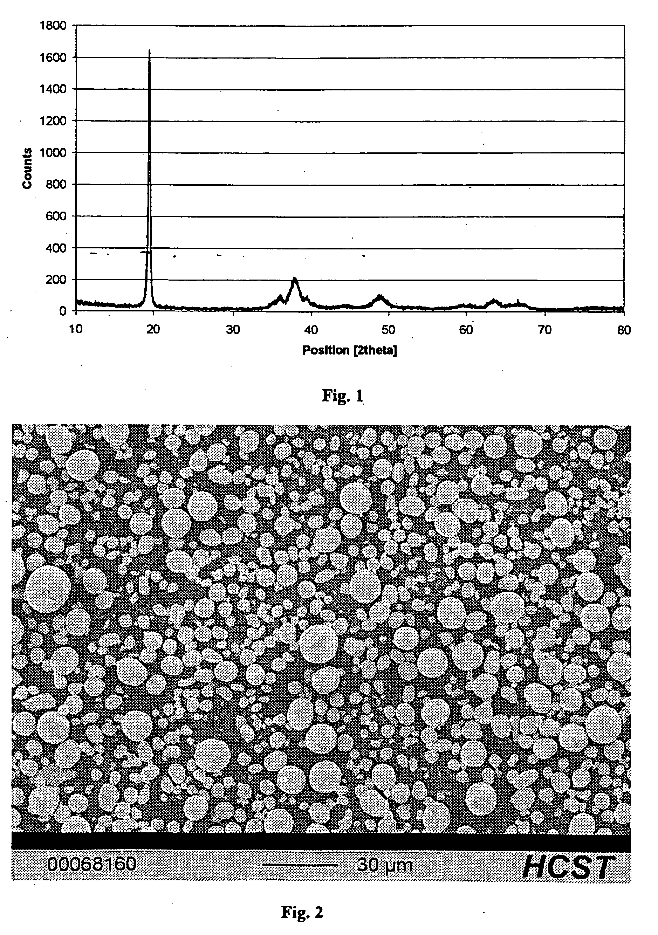

Die erfindungsgemäßen partiell oxidierten Mischmetallhydroxide zeichnen sich insbesondere dadurch aus, daß diese keine Gamma-Oxihydroxidstrukturen aufweisen. Fig. 1 zeigt beispielhaft ein Röntgenbeugungsspektrum (RBS) eines erfindungsgemäßen partiell oxidierten Mischmetallhydroxides, das gemäß Beispiel 1 hergestellt wurde, in dem keine Gamma-Phase zu erkennen ist. Bevorzugte erfindungsgemäße partiell oxidierte Mischmetallhydroxide weisen keine Alpha-Phase auf.

Die Anwesenheit der Alpha-Phase neben der gewünschten Beta-Phase bedeutet eine Inhomogenität des Vorstoffes und beeinflusst schließlich auch die Homogenität des daraus erhältlichen Endproduktes.

Ferner könnte festgestellt werden, daß mit zunehmenden Oxidationsgrad, z.B. wenn der Letztere im oxidierten Mischmetallhydroxid einen Wert von z.B 3,0 erreicht, die ionischen Verunreinigungen, solche wie z. B. Natrium, im Produkt ansteigen, da bei der Phasenumwandlung zum Gamma-Oxihydroxid größere Lagenabstände im Kristallgitter den Einbau unerwünschter Fremdionen ermöglichen. Die Gamma-Phase führt zu einer beträchtlichen Volumenausdehnung aufgrund einer interlaminaren Extension und begünstigt dadurch die Einlagerung der Fremdionen.

Die erfindungsgemäßen partiell oxidierten Mischmetallhydroxide zeichnen sich auch dadurch aus, daß sie niedrige Natrium-Gehalte aufweisen. Vorzugsweise enthalten sie < 2000 ppm, besonders bevorzugt < 1000 ppm Natrium, insbesondere < 500 ppm Natrium.

Die erfindungsgemäßen partiell oxidierten Mischmetallhydroxide liegen vorzugsweise in Pulverform vor, wobei die mittlere Korngröße der Sekundärpartikel, gemessen nach ASTM B822 vorzugsweise 2 bis 30 $\mu$m, besonders bevorzugt 3 bis 15 $\mu$m beträgt. Unter Sekundärpartikeln werden Teilchen verstänlen, welche sich aus Primärkörnern zusammensetzen.

Ein besonderes Merkmal des erfindungsgemäßen Mischmetallhydroxid-Pulvers ist seine hohe Klopfdichte, die unmittelbar auf die Klopfdichte des Endproduktes, z.B. eines Lithium- Mischmetalloxides einen direkten Einfluß hat. Die hohe Klopfdichte ist erforderlich um eine hohe volumetrische Energiedichte in der Batterie zu erreichen. Vorzugsweise weisen die erfindungsgemäßen partiell oxidierten Mischmetallhydroxidpulver eine Klopfdichte, bestimmt nach ASTM B527, größer als 1,7 g/cm$^3$, besonders bevorzugt größer als 1,9 g/cm$^3$ auf.

Die erfindungsgemäßen pulverförmigen Mischmetallhydroxide können sowohl in sphärischer als auch in regulärer (nicht-sphärischer) Teilchenform hergestellt werden.

Die bevorzugten erfindungsgemäßen Pulver zeichnen sich besonders durch die sphärische Form der Pulverpartikel aus, deren Formfaktor einen Wert von größer 0,7, besonders bevorzugt von größer 0,9 aufweist.

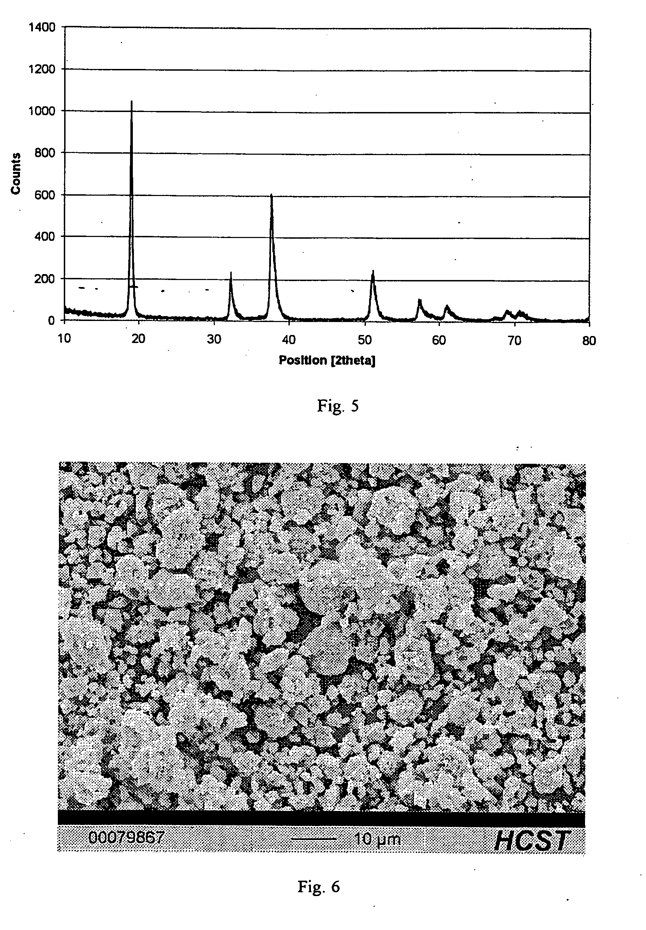

Der Formfaktor der Sekundärpartikel kann nach der in US 5476530, Spalten 7 und 8 und Abbildung 5 genannten Methode bestimmt werden. Diese Methode ermittelt einen Formfaktor der Partikel, welcher ein Mass für die Sphärizität der Partikel ist. Der Formfaktor der Partikel kann aus den REM-Aufnahmen der Materialien bestimmt werden.

Der Formfaktor wird durch die Evaluierung des Partikelumfangs sowie der Partikelfläche und der Bestimmung des aus der jeweiligen Größe abgeleiteten Durchmessers bestimmt. Die genannten Durchmesser ergeben sich aus

$$d_U = U/\pi \qquad\qquad d_A = \left(4A/\pi\right)^{\frac{1}{2}}.$$

Der Formfaktor der Partikel f leitet sich ab aus dem Partikelumfang U und der Partikelfläche A gemäß:

$$f = \left(\frac{d_A}{d_U}\right) = \left(\frac{4\pi A}{U^2}\right).$$

Im Falle eines idealen sphärischen Partikels sind $d_A$ und $d_U$ gleich groß und es würde sich ein Formfaktor von genau eins ergeben.

Fig. 2 zeigt beispielhaft eine mit einem Rasterelektromenmikroskop (REM) aufgenommenen Abbildung des erfindungsgemäßen partiell oxidierten Mischmetallhydroxid - Pulvers, welches nach Beispiel 1 hergestellt wurde.

Die erfindungsgemäßen partiell oxidierten Mischmetallhydroxid-Pulver weisen eine normierte Breite der Korngrößenverteilung, definiert nach der Formel

$$\frac{D90-D10}{D50}$$

worin D Durchmesser der Pulverpartikel bedeutet, von kleiner 1,8, besonders bevorzugt von kleiner 1,2 auf.

Die Erfindung betrifft weiterhin ein effizientes und wirtschaftliches Verfahren zur Herstellung der erfindungsgemäßen partiell oxidierten Mischmetallhydroxide.

Gegenstand der Erfindung ist daher auch ein Verfahren zur Herstellung der erfindungsgemäßen partiell oxidierten Mischmetallhydroxide enthaltend die folgenden Schritte:

- Co-Fällung von sphärischen Mischmetallhydroxiden aus entsprechenden Metallsalzlösungen,
- partielle Oxidation der Fällungsprodukte (Mischmetallhydroxides) unter Einsatz eines Oxidationsmittels,
- Abtrennung des co-gefällten partiell oxidierten Mischmetallhydroxides aus der Suspension
- Waschung und Trocknung des partiell oxidierten Mischmetallhydroxides

Die erfindungsgemäßen partiell oxidierten Mischmetallhydroxide können sowohl in sphärischen als auch in nicht-sphärischer Teilchenform hergestellt werden, wobei die Herstellung der erstgenannten in Gegenwart von Ammoniak oder Ammoniumsalzen durchgeführt wird.

Die Herstellung von Mischhydroxiden erfolgt durch die Fällung aus wässrigen Metallsalzlösungen durch pH-Wert-Einstellung auf 8-14, besonders bevorzugt auf 9-13 durch Zufuhr von Alkalihydroxidlösungen. Das Verfahren kann diskontinuierlich oder kontinuierlich durchgeführt werden. Bei dem kontinuierlichen Verfahren erfolgt die gleichzeitige Zufuhr von Metallsalzlösung und der Alkalihydroxidlösung zu einem Fällreaktor unter kontinuierlichem Abzug der Produktsuspension. Als Metallsalze eignen sich wasserlösliche Metallsalze, z.B. Sulfate, Nitrate, Halogenide, wie z.B. Chloride oder Fluoride. Als Alkalisalzlösungen zur Durchführung der Fällung werden Hydroxide der Alkalimetalle, bevorzugt Natriumhydroxid, sowie Ammoniumhydroxid eingesetzt.

Während des Fällprozesses sollte eine Oxidation der Metalle vermieden werden, um eine hohe Klopfdichte des partiell oxidierten Mischmetallhydroxides erzielen zu können. Deshalb wird die Oxidation im Anschluß an die Fällung in einem weiteren Reaktor durchgeführt.

Um in einem kommerziellen Maßstab die erfindungsgemäßen partiell oxidierten Mischmetallhydroxide mit erhöhten Oxidationsgrad synthetisieren zu können, steht erfindungsgemäß ein Verfahren zur Verfügung, welches sich im Hinblick auf eine einfache Integrierbarkeit in den bestehenden Produktionsprozess besonders eignet. Bei diesem Verfahren kann die partielle Oxidation des kogefällten Mischmetallhydroxides noch in der Produktsuspension erfolgen. Das Verfahren wird realisiert, indem die Produktsuspension mit dem kogefällten Mischmetallhydroxid aus dem Fällreaktor in einen nachgeschatteten Rührbehälter überführt wird. In diesen Behälter wird über ein Einleitrohr ein Oxidationsmittel zugeführt. Als Oxidationsmittel eignen sich besonders Luft, Sauerstoff, Wasserstoffperoxid, Natriumperoxidisulfat, Kaliumperoxidisulfat und/oder deren Mischungen.

Vorzugsweise beträgt die Reaktionstemperatur der Suspension bei der partiellen Oxidation 25 bis 65°C, besonders bevorzugt 30 bis 60°C.

Der pH-Wert der Suspension während der partiellen Oxidation des Mischmetallhydroxides beträgt bevorzugt 7-13, besonders bevorzugt 8-12. Eine wichtige Rolle während der partiellen Oxidation spielt ebenfalls die Verweilzeit der Produktsuspension im Reaktionsbehälter. Es wurde nun gefunden, dass die Verweilzeit von 1 bis 10 Stunden, bevorzugt von 2 bis 8 Stunden und besonders bevorzugt von 4 bis 6 Stunden zu erfindungsgemäßen partiell oxidierten Mischmetallhydroxiden führt.

Nach dem Oxidationsschritt wird das partiell oxidierte Mischmetallhydroxid kontinuierlich abgezogen. Es ist jedoch auch möglich das Produkt portionsweise abzuziehen: Das erfindungsgemäße partiell oxidierte Mischmetallhydroxid wird anschließend auf einer Nutsche gewaschen und in einem Trockenschrank getrocknet.

Die Herstellung von erfindungsgemäßen partiell oxidierten Mischmetallhydroxiden kann auch über ein anderes Verfahren erfolgen, indem die kogefällten Mischmetallhydroxide aus der Suspension abgetrennt, gewaschen und unter einer sauerstoffhaltigen Atmosphäre, wie z.B. Luft, getrocknet werden.

Der Gegenstand der Erfindung ist somit ein weiteres Verfahren enthaltend folgende Schritte:

- Co-Fällung von sphärischen Mischmetallhydroxiden aus entsprechenden Metallsalzlösungen,
- Abtrennung des co-gefällten Mischmetallhydroxides aus der Suspension,
- Waschung des Mischmetallhydroxides,
- Trocknung und gleichzeitige partielle Oxidation des Mischmetallhydroxides unter sauerstoffhaltiger Atmosphäre bei einer Temperatur von größer als 80°C mindestens 3 Stunden.

Die erfindungsgemäßen partiell oxidierten Mischmetallhydroxide eignen sich besonders gut zur Synthese von Endprodukten mit der chemischen Formel $Li_aNi_bM1_cM2_d(O)_2$, auch Endprodukt genannt, die als Aktivmaterial für positive Elektroden in Sekundärbatterien eingesetzt werden. Die erfindungsgemäßen partiell oxidierten Mischmetallhydroxide sind so konzipiert, dass das daraus erhältliche Endprodukt - Lithiummischmetalloxid über einen einfachen Syntheseweg hergestellt werden kann.

Der Gegenstand der Erfindung ist weiterhin ein Verfahren zur Herstellung von Aktivmaterialien für Sekundärbatterien enthaltend folgende Schritte:

- Mischen einer chemischen Verbindung gemäß einem der Ansprüche 1 bis 18 mit einer Lithium - enthaltenden Komponente,
- Kalzinierung und Siebung der Mischung.

Bei diesem Verfahren verläuft die chemische Umsetzung des Vorstoffes zu einer chemischen Verbindung $Li_aNi_bM1_cM2_d(O)_2$, wobei M1 mindestens ein Element ausgewählt aus der Gruppe bestehend aus Fe, Co, Mg, Zn, Cu und deren Mischungen und/oder M2 mindestens ein Element ausgewählt aus der Gruppe bestehend aus Mn, Al, B, Ca, Cr und deren Mischungen ist, unter Retention der Teilchenform und/oder Korngrößenverteilung.

Das Endprodukt kann hergestellt werden, indem das erfindungsgemäße partiell oxidierte Mischmetallhydroxid mit einer Lithium - enthaltenden Komponente gemischt und anschließend kalziniert und gesiebt wird. Als Lithiumenthaltenden Komponenten eignen sich insbesondere Lithiumhydroxid, Lithiumcarbonat, Lithiumnitrat und/oder deren Mischungen. Die Kalzinierung kann bei Temperaturen von größer als 600°C, bevorzugt von größer als 700°C erfolgen.

Das aus dem erfindungsgemäßen partiell oxidierten Mischmetallhydroxid erhältliche Endprodukt zeichnet sich insbesondere durch ein sehr gutes Siebverhalten aus. Die Siebausbeute des Endproduktes beträgt größer 90%, bevorzugt größer 95%, besonders bevorzugt größer 98%.

Die erfindungsgemäßen partiell oxidierten Mischmetallhydroxide werden vorzugsweise als Vorstoff für Kathodenaktivmaterial in Lithium-Sekundärbatterien, zusammen mit dem Fachmann bekannten Materialien eingesetzt.

Die Erfindung wird anhand der nachfolgenden Beispiele näher erläutert.

Die in den folgenden Beispielen angegebenen mittleren Oxidationsgrade werden nach dem Rupp - Verfahren bestimmt. Dieses Verfahren beruht auf dem Verfahren der Braunsteinbestimmung. Dabei werden höherwertige Metallionen (Wertigkeit +3 oder +4 in diesem Falle) von Iodid zu Metall(II)-Ionen reduziert, wobei das Iodid zu elementaren Iod oxidiert. Das entstehende Iod wird mittels Titration gegen Natriumthiosulfat-Maßlösung erfasst. Die Äquivalenzpunktindikation erfolgt mit Stärkelösung.

0,2 g des Prüfguts werden in einem 500 ml Schliff-Erlenmeyerkolben auf einer Analysenwaage eingewogen. Mittels eines 50, ml Messzylinders werden 50 ml Kaliumiodid-Lösung und 25 ml verdünnte Schwefelsäure zugegeben. Der Erlenmeyerkolben wird dann mit einem Glasstopfen verschlossen.

Das Prüfgut wird bei Raumtemperatur durch gelegentliches Schwenken des Erlenmeyerkolbens gelöst. Die Lösedauer beträgt 30 bis 60 min.

Nach vollständiger Probenauflösung erfolgt die Titration gegen Natriumthiosulfat-Maßlösung unter Zusatz von ca. 5 Tropfen Stärke-Lösung bis zum erkennbaren Farbumschlag von braun/blau nach hellgrün.

Um eventuelle Störreaktionen zu erfassen ist es nötig eine Blindprobe parallel im Analysengang mitzuführen. Der Verbrauch an Natriumthiosulfat-Maßlösung ist bei der Auswertung mit einzubeziehen.

Der mittlere Oxidationsgrad über alle Metalle der Verbindung lässt sich über folgende Formel berechnen:

$$\alpha = 2 + \frac{(V(Na_2S_2O_{3,Probe}) - V(Na_2S_2O_{3,blind})) \cdot Titer(Na_2S_2O_3) \cdot c(Na_2S_2O_3) \cdot M(Probe)}{m(Probe)}$$

Beispiele:

Beispiel 1

Eine Lösung, die jeweils 0,7 molar an $NiSO_4$, $CoSO_4$ und $MnSO_4$ ist, wird kontinuierlich einem Fällreaktor zugeführt.

Neben den metallhaltigen Lösungen werden simultan eine 2,5 molare NaOH-Lösung sowie eine 12,5 %-ige NH3-Lösung kontinuierlich in den Reaktor eingespeist. Diese Ströme werden so dosiert, dass sich im stationären Betriebszustand eine Ammoniak-Konzentration von 30 g/l und eine freie Natronlauge-Konzentration von 1,4 g/l einstellt. Unter diesen Bedingungen stellt sich ein pH-Wert von 12,4 ein. Der hohe pH-Wert sorgt dafür, dass aus den metallhaltigen Lösungen die metallischen Komponenten als Hydroxide gefällt werden. Durch die Zugabe der verschiedenen Einspeiselösungen ergibt sich eine Feststoffkonzentration im Reaktor von 40 g/l. Mittels externer Wärmezufuhr wird die Temperatur im Reaktor auf 50°C eingeregelt. Die mittlere Verweilzeit des Feststoffes im Reaktor beläuft sich auf 6 h.

Die Produktsuspension wird kontinuerlich aus dem Reaktor abgezogen, und zunächst der Wäsche auf einer Nutsche zugeführt. Die Wäsche ist erforderlich, um den Feststoff von anhaftenden Verunreinigungen zu trennen.

Nach der Waschung des Hydroxides erfolgte eine 24 h -Trocknung und parallele Oxidation des Feststoffes in einem Umluft-Trockenschrank an sauerstoffhaltiger Atmosphäre bei 100°C.

In der synthetisierten Verbindung weisen die Metalle Nickel, Kobalt und Mangan ein molares Verhältnis von Ni : Co : Mn = 1 : 1 : 1 auf.

Der so synthetisierte Feststoff weist eine experimentell bestimmte mittlere Oxidationsstufe über alle Metalle von 2,7 auf.

Die Klopfdichte des Materials wurde zu 1,74 g/cm³ gemessen.

Die REM-Aufnahme in Fig. 2 zeigt die besondere Sphärizität als auch die ausgeprägte Kompaktheit der Partikel des so synthetisierten Materials.

Der ermittelte Formfaktor des Materials beträgt 0,85.

Zur weiteren Umsetzung des Vorstoffes zum Endprodukt erfolgte zunächst eine mechanische Vermischung des Vorstoffes mit Lithiumcarbonat technisch (Firma Chemetall). Das molare Verhältnis der Lithiumverbindung zum Vorstoff betrug in diesem Falle 1,05 : 1,00.

Die mechanische Mischung wurde anschließend bei 890°C unter sauerstoffhaltiger Atmosphäre 30 Stunden lang geglüht.

Nach der Kalzination erfolgte die Siebung des Materials.

Die Siebausbeute betrug 97,5 %. 2,5 % des Materials ließen sich nicht durch ein 50 μm-Sieb sieben. Nach der Siebung wurde das Material einer zweiten Kalzination bei 890°C unter sauerstoffhaltiger Atmosphäre für 4 Stunden unterzogen. Danach erfolgte erneut eine Siebung mit 99,6 % Siebausbeute.

Die Klopfdichte des Endproduktes betrug dabei 2,0 g/cm$^3$.

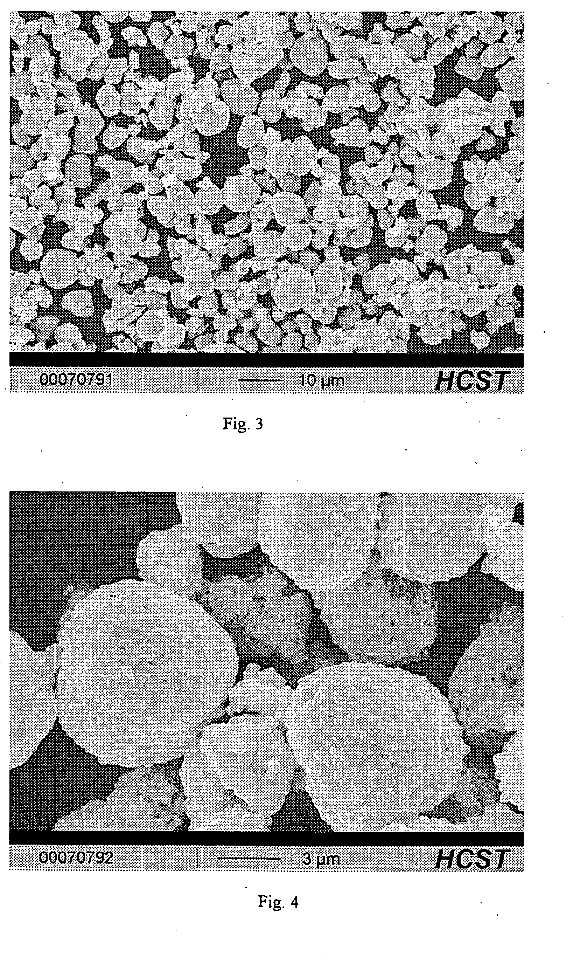

Den REM-Aufnahmen des Endproduktes, Fig. 3 bzw. 4 kann entnommen werden, daß die Umsetzung des Vorstoffes zum Endprodukt unter Beibehaltung der sphärischen Form der Sekundärpartikel des Vorstoffes stattgefunden hat.

Vergleichsbeispiel 1 :

Eine Lösung, die jeweils 0,7 molar an $NiSO_4$, $CoSO_4$ und $MnSO_4$ ist, wird kontinuierlich einem Fällreaktor zugeführt.

Neben den metallhaltigen Lösungen werden simultan eine 2,5 molare NaOH-Lösung sowie eine 12,5 %-ige NH3-Lösung kontinuierlich in den Reaktor eingespeist. Diese Ströme werden so dosiert, dass sich im stationären Betriebszustand eine Ammoniak-Konzentration von 8,3 g/l und eine freie Natronlauge-Konzentration von 0,5 g/l einstellt. Unter diesen Bedingungen stellt sich ein pH-Wert von 12,0 ein. Der hohe pH-Wert sorgt dafür, dass aus den metallhaltigen Lösungen die metallischen Komponenten als Hydroxide gefällt werden. Durch die Zugabe der verschiedenen Einspeiselösungen ergibt sich eine Feststoffkonzentration im Reaktor von 80 g/l. Mittels externer Wärmezufuhr wird die Temperatur im Reaktor auf 45°C eingeregelt. Die mittlere Verweilzeit des Feststoffes im Reaktor beläuft sich auf 12 h.

Die Produktsuspension wird kontinuerlich aus dem Reaktor abgezogen, und zunächst einer Filtration und Wäsche unterzogen. Die Wäsche ist erforderlich, um den Feststoff von anhaftende Verunreinigungen zu trennen.

Nach der Waschung des Hydroxides erfolgte eine Trocknung des Feststoffes bei 70°C.

In der synthetisierten Verbindung wiesen die Metalle Nickel, Kobalt und Mangan ein molares Verhältnis von Ni : Co : Mn = 1 : 1 : 1 auf.

Das so synthetisierte Mischhydroxid wies eine experimentell bestimmte mittlere Oxidationsstufe über alle Metalle von 2,07 auf.

Das Röntgenbeugungsspektrum zu der synthetisierten Verbindung ist in Fig. 5 dargestellt.

Zur weiteren Umsetzung des Vorstoffes zum Endprodukt erfolgte zunächst eine mechanische Vermischung des Vorstoffes mit Lithiumcarbonat technisch (Firma Chemetall). Das molare Verhältnis der Lithiumverbindung zur Mischmetallverbindung betrug in diesem Falle 1,07 : 1,00.

Die mechanische Mischung wurde anschliessend bei 860°C unter suaerstoffhaltiger Atmosphäre 30 Stunden lang bei 860°C geglüht.

Nach der Kalzination erfolgte die Siebung des Materials. Die Siebausbeute betrug 64 %.

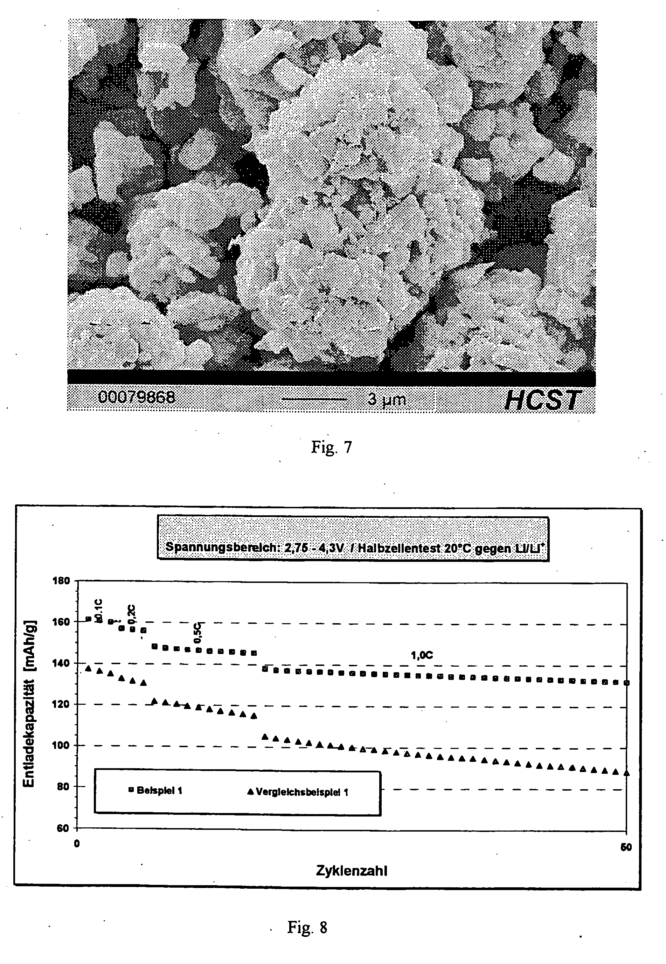

Den REM-Aufnahmen des Endproduktes, Fig. 6 bzw. 7, kann entnommen werden, daß bei der Umsetzung des Vorstoffes zum Endprodukt die sphärische Partikelform des Vorstoffes aufgrund des unregelmässigen Wachstums der Primärkömer verloren gegangen ist.

Ein Vergleich der elektrochemischen Leistungsdaten von Halbzellen, die das gemäss Beispiel 1 und das gemäss Vergleichsbeispiel 1 synthetisierte Material als Kathodenaktivmaterial beinhalten, ist in Fig. 8 gezeigt. Der Abbildung kann entnommen werden, dass eine mit der Substanz aus Beispiel 1 gefertigte Halbzelle gegenüber einer mit der Substanz aus Vergleichsbeispiel 1 gefertigten Halbzelle bessere Leistungsdaten zeigt.

Beispiel 2:

Eine Lösung, die jeweils 0,7 molar an $NiSO_4$, $CoSO_4$ und $MnSO_4$ ist, wird kontinuierlich einem Fällreaktor zugeführt. Simultan wird eine 2,5 molare NaOH-Lösung sowie eine 12,5 %-ige NH3-Lösung kontinuierlich in den Reaktor eingespeist. Diese Ströme werden so dosiert, dass sich im stationären Betriebszustand eine Ammoniak-Konzentration von 8 g/l und eine freie Natronlauge-Konzentration von 0,5 g/l einstellt. Unter diesen Bedingungen stellt sich ein pH-Wert von 12,0 ein. Der hohe pH-Wert sorgt dafür, dass aus den metallhaltigen Lösungen die metallischen Komponenten als Hydroxide gefällt werden. Durch die Zugabe der verschiedenen Einspeiselösungen ergibt sich eine Feststoffkonzentration im Reaktor von 50 g/l. Mittels externer Wärmezufuhr wird die Temperatur im Reaktor auf 50°C eingeregelt. Die mittlere Verweilzeit des Feststoffes im Reaktor beläuft sich auf 5 h.

Die Produktsuspension wird kontinuerlich aus dem Fällreaktor einem zweiten Reaktor zugeführt, in dem mittels pH-Steuerung und Zudosierung von 2,5 molarer NaOH-Lösung der pH-Wert auf 12,0 sowie die Temperatur mittels externer Wärmezufuhr auf 50°C eingestellt wird. Die mittlere Verweilzeit wird auf 10 h eingestellt. In diesen zweiten Reaktor wird Luft mit einem Volumenstrom von 0,5 Liter/min eingeleitet. Dabei verändert die Suspension ihre Farbe von hellbraun im ersten Reaktor zu dunkelbraun bis schwarz im zweiten Reaktor. Die Suspension wird kontinuierlich aus dem zweiten Reaktor abgezogen, und zunächst der Wäsche auf einer Nutsche zugeführt Die Wäsche ist erforderlich, um den Feststoff von anhaftenden Verunreinigungen zu trennen.

Nach der Waschung des Produktes erfolgt eine 24 h-Trocknung des Feststoffes in einem Vakuum-Trockenschrank bei 100°C.

In der synthetisierten Verbindung weisen die Metalle Nickel, Kobalt und Mangan ein molares Verhältnis von Ni : Co : Mn = 1 : 1 : 1 auf.

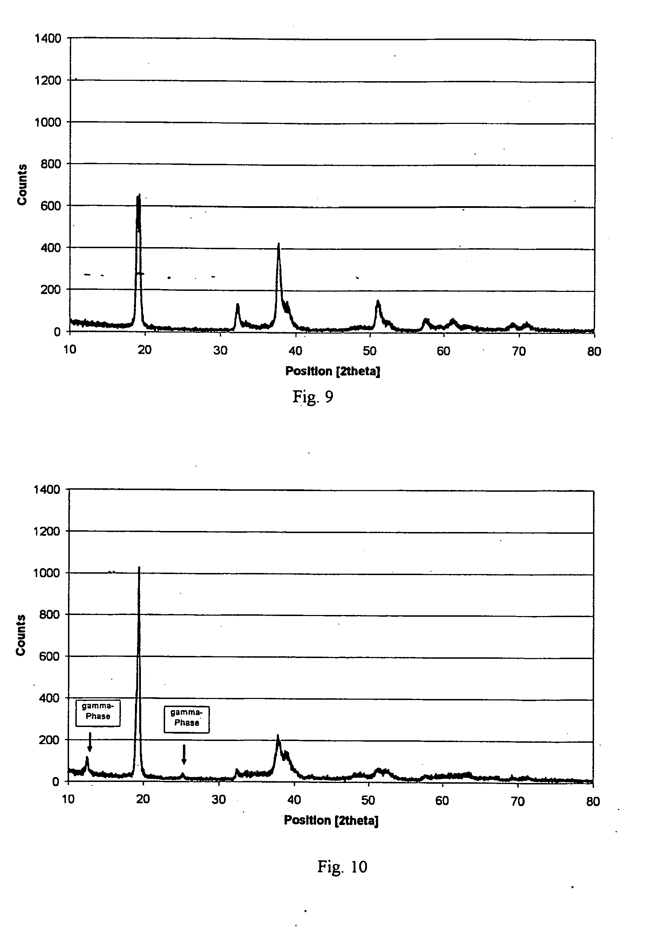

Der so synthetisierte Feststoff weist eine experimentell bestimmte mittlere Oxidationsstufe über alle Metalle von 2,39 auf. Der Natriumgehalt des Produktes beträgt 70ppm. Im RBA-Spektrum, Fig. 9 werden lediglich Peaks, die einer β-Struktur zugeordnet werden können, nachgewiesen. Es finden sich keine weiteren Phasen im RBA-Spektrum.

Vergleichsbeispiel 2:

Eine Lösung, die jeweils 0,7 molar an $NiSO_4$, $CoSO_4$ und $MnSO_4$ ist, wird kontinuierlich einem Fällreaktor zugeführt. Simultan wird eine 2,5 molare NaOH-Lösung sowie eine 12,5 %-ige NH3-Lösung kontinuierlich in den Reaktor eingespeist. Diese Ströme werden so dosiert, dass sich im stationären Betriebszustand eine Ammoniak-Konzentration von 8 g/l und eine freie Natronlauge-Konzentration von 0,5 g/l einstellt. Unter diesen Bedingungen stellt sich ein pH-Wert von 12,0 ein. Der hohe pH-Wert sorgt dafür, dass aus den metallhaltigen Lösungen die metallischen Komponenten als Hydroxide gefällt werden. Durch die Zugabe der verschiedenen Einspeiselösungen ergibt sich eine Feststoffkonzentration im Reaktor von 50 g/l. Mittels externer Wärmezufuhr wird die Temperatur im Reaktor auf 50°C eingeregelt. Die mittlere Verweilzeit des Feststoffes im Reaktor beläuft sich auf 5 h.

Die Produktsuspension wird kontinuierlich aus dem Fällreaktor einem zweiten Reaktor zugeführt, in dem mittels pH-Steuerung und Zudosierung von 2,5 molarer NaOH-Lösung der pH-Wert auf 12,5 sowie die Temperatur mittels externer Wärmezufuhr auf 70°C eingestellt wird. Die mittlere Verweilzeit wird auf 15 h eingestellt. In diesen zweiten Reaktor wird Luft mit einem Volumenstrom von 0,5Liter/min eingeleitet. Dabei verändert die Suspension ihre Farbe von hellbraun im ersten Reaktor zu dunkelbraun bis schwarz im zweiten Reaktor. Die Suspension wird kontinuierlich aus dem zweiten Reaktor abgezogen, und zunächst der Wäsche auf einer Nutsche zugeführt. Die Wäsche ist erforderlich, um den Feststoff von anhaftenden Verunreinigungen zu trennen.

Nach der Waschung des Produktes erfolgt eine 24 h-Trocknung des Feststoffes in einem Vakuum-Trockenschrank bei 100°C.

In der synthetisierten Verbindung weisen die Metalle Nickel, Kobalt und Mangan ein molares Verhältnis von Ni : Co : Mn = 1 : 1 : 1 auf.

Der so synthetisierte Feststoff weist eine experimentell bestimmte mittlere Oxidationsstufe über alle Metalle von 2,83 auf. Der Natriumgehalt des Produktes beträgt 3000 ppm. Im RBA-Spektrum, Fig. 10, werden neben den Peaks, die einer Beta-Struktur zugeordnet werden können, Anteile einer Gamma -Phase nachgewiesen.

Weitere Beispiele zur partiellen Oxidation der Mischmetallverbindungen in Suspension sind in nachfolgender Tabelle 18 gezeigt:

Tabelle 18:

| pH-Wert - | Temperatur °C | Verweilzeit h | Oxidationsmittel | Oxidationsgrad - |
|---|---|---|---|---|
| 11,5 | 50 | 8 | Luft | 2,33 |
| 12,0 | 50 | 8 | Luft | 2,37 |
| 12,0 | 60 | 8 | Luft | 2,61 |
| 12,5 | 60 | 8 | Luft | 2,69 |
| 12,5 | 60 | 5 | Luft | 2,43 |
| 12,8 | 60 | 8 | Luft | 2,67 |
| 12,5 | 60 | 5 | Sauerstoff | 2,47 |
| 12 | 50 | 2 | H2O2 | 2,36 |
| 12 | 60 | 2 | H2O2 | 2,54 |

**Patentansprüche**

**1.** Chemische Verbindung der Formel

$Ni_bM1_cM2_d(O)_x(OH)_y$,
wobei

M1 mindestens ein Element aus der Gruppe bestehend aus Fe, Co, Mg, Zn, Cu und deren Mischungen,
M2 mindestens ein Element aus der Gruppe Mn, Al, B; Ca, Cr,
und deren Mischungen bedeuten,
$b \leq 0,8$
$c \leq 0,5$
$d \leq 0,5$ ist, und
x eine Zahl zwischen 0,1 bis 0,8,
y eine Zahl zwischen 1,2 und 1,9 ist und die Summe aus x+y=2 ergibt.

2. Chemische Verbindung nach Anspruch 1, wobei

   $0,3 \leq b \leq 0,6$
   $0,1 \leq c \leq 0,4$
   $0,1 \leq d \leq 0,4$

   ist.

3. Chemische Verbindung nach Anspruch 1 oder 2, wobei
   x eine Zahl zwischen 0,2 und 0,7 und
   y eine zahl zwischen 1,3 und 1,8 ist und die Summe aus x + y =2 ergibt.

4. Chemische Verbindung nach Anspruch 1 bis 3, wobei
   x eine Zahl zwischen 0,3 und 0,6 und
   y eine Zahl zwischen 1,4 und 1,7 ist.

5. Chemische Verbindung nach einem der Ansprüche 1 bis 4, **dadurch gekennzeichnet, daß** sie keine Gamma-Oxihydroxidstrukturen aufweist.

6. Chemische Verbindung nach einem der Ansprüche 1 bis 5, **dadurch gekennzeichnet, daß** sie keine Alpha - Hydroxidstrukturen aufweist.

7. Chemische Verbindung nach einem der Ansprüche 1 bis 6, **dadurch gekennzeichnet, daß** der Gehalt an Natrium weniger als 2000 ppm beträgt.

8. Chemische Verbindung nach einem der Ansprüche 1 bis 6, **dadurch gekennzeichnet, daß** der Gehalt an Natrium weniger als 1000 ppm beträgt.

9. Pulver bestehend aus der chemischen Verbindung nach einem der Ansprüche 1 bis 8.

10. Pulver nach Anspruch 9, **dadurch gekennzeichnet, daß** es eine Klopfdichte, gemessen nach ASTM B 527 von größer als 1,7 g/cm$^3$ aufweist.

11. Pulver nach einem der Ansprüche 9 oder 10, **dadurch gekennzeichnet, daß** es eine Klopfdichte, gemessen nach ASTM B 527 von größer als 1,9 g/cm$^3$ aufweist.

12. Pulver nach einem der Ansprüche 9 bis 11, **dadurch gekennzeichnet, daß** es eine mittlere Korngröße, gemessen nach ASTM B 822, von 2-30 $\mu$m aufweist.

13. Pulver nach einem der Ansprüche 9 bis 12, **dadurch gekennzeichnet, daß** es eine mittlere Korngröße, gemessen nach ASTM B 822, von 3-15 $\mu$m aufweist.

14. Pulver nach einem der Ansprüche 9 bis 13, **dadurch gekennzeichnet, daß** die Pulverpartikel eine sphärische Form aufweisen.

15. Pulver nach einem der Ansprüche 9 bis 14, **dadurch gekennzeichnet, daß** die Pulverpartikel einen Formfaktor von größer 0,7 aufweisen.

16. Pulver nach einem der Ansprüche 9 bis 15, **dadurch gekennzeichnet, daß** die Pulverpartikel einen Formfaktor von größer 0,9 aufweisen.

17. Pulver nach einem der Ansprüche 9 bis 16, wobei die normierte Breite der Korngrößenverteilung, definiert nach der Formel (1) kleiner 1,8 ist,

$$\frac{D90\text{-}D10}{D50} \qquad\qquad (1)$$

worin D Durchmesser der Pulverpartikel bedeutet.

18. Pulver nach einem der Ansprüche 9 bis 17, wobei die normierte Breite der Korngrößenverteilung, definiert nach der Formel (1) kleiner 1,2 ist,

$$\frac{D90\text{-}D10}{D50} \qquad\qquad (1)$$

worin D Durchmesser der Pulverpartikel bedeutet.

19. Verfahren zur Herstellung der chemischen Verbindung nach einem der Ansprüche 1 bis 18 bestehend aus folgenden Schritten:

   a. Co-Fällung von sphärischen Mischmetallhydroxiden aus entsprechenden Metallsalzlösungen,
   b. partielle Oxidation der Fällungsprodukte (Mischmetallhydroxide) unter Einsatz eines Oxidationsmittels,
   c. Abtrennung es co-gefällten partiell oxidierten Mischmetallhydroxides aus der Suspension,
   d. Waschung und Trocknung des partiell oxidierten Mischmetallhydroxides

20. Verfahren nach Anspruch 19, wobei die chemische Verbindung ein partiell oxidiertes Mischmetallhydroxid ist.

21. Verfahren gemäß Anspruch 19 oder 20, **dadurch gekennzeichnet, daß** die partielle Oxidation in einer Suspension erfolgt.

22. Verfahren gemäß einem der Ansprüche 19 bis 21, **dadurch gekennzeichnet, daß** es sich bei dem Oxidationsmittel um ein Oxidationsmittel aus der Gruppe bestehend aus Luft, Sauerstoff, Wasserstoffperoxid, Natriumperoxidisulfat, Kaliumperoxidisulfat und/oder deren Mischungen handelt.

23. Verfahren gemäß einem der Ansprüche 19 bis 22, **dadurch gekennzeichnet, daß** die Reaktionstemperatur der Suspension bei der partiellen Oxidation 25 - 65 °C beträgt.

24. Verfahren gemäß einem der Ansprüche 19 bis 23, **dadurch gekennzeichnet, daß** die Reaktionstemperatur der Suspension bei der partiellen Oxidation 30 - 60 °C beträgt.

25. Verfahren gemäß einem der Ansprüche 19 bis 24, wobei der pH-Wert der Suspension 7-13 beträgt.

26. Verfahren gemäß einem der Ansprüche 19 bis 25, wobei der pH-Wert der Suspension 8 -12 beträgt.

27. Verfahren gemäß einem der Ansprüche 19 bis 25, **dadurch gekennzeichnet, dass** die partielle Oxidation des kogefällten Mischhydroxides 1 bis 10 Stunden beträgt.

28. Verfahren gemäß einem der Ansprüche 19 bis 26, **dadurch gekennzeichnet, dass** die partielle Oxidation des kogefällten Mischhydroxides 2 bis 8 Stunden beträgt.

29. Verfahren gemäß einem der Ansprüche 19 bis 27, **dadurch gekennzeichnet, dass** die partielle Oxidation des kogefällten Mischhydroxides 4 bis 6 Stunden beträgt.

**30.** Verfahren zur Herstellung von Aktivmaterialien für positive Elektroden von Sekundärbatterien enthaltend folgende Schritte:

- Mischen einer chemischen Verbindung gemäß einem der Ansprüche 1 bis 18 mit einer Lithium - enthaltenden Komponente,
- Kalzinierung und Siebung der Mischung.

**31.** Verfahren zur Herstellung von Aktivmaterialien für positive Elektroden von Sekundärbatterien gemäß Anspruch 29 enthaltend die Schritte:

- Bereitstellen eines Pulvers der chemischen Verbindung gemäß einem der Ansprüche 1-18,
- Umsetzung des Pulvers zu einer chemischen Verbindung $Li_aNi_bM1_cM2_d(O)2$, wobei M1 mindestens ein Element ausgewählt aus der Gruppe bestehend aus Fe, Co, Mg, Zn, Cu und deren Mischungen, und/oder M2 mindestens ein Element ausgewählt aus der Gruppe Mn, Al, B, Ca, Cr und deren Mischungen bedeuten, **dadurch gekennzeichnet, daß** die Umsetzung unter Retention der Form der Sekundärpartikel und/oder Korngrößenverteilung stattfindet.

**32.** Verfahren zur Herstellung von Aktivmaterialien für positive Elektroden von Sekundärbatterien gemäß Anspruch 29 enthaltend folgende Schritte:

- Mischen einer chemischen Verbindung gemäß einem der Ansprüche 1 bis 18 mit einer Lithium - enthaltenden Komponente,
- Kalzinierung und Siebung der Mischung.

**33.** Verfahren gemäß Anspruch 29 oder 30, wobei es sich bei der Lithium - enthaltenden Komponente um Lithiumcarbonat, Lithiumhydroxid, Lithiumnitrat und/oder deren Mischungen handelt.

**34.** Verfahren gemäß einem der Ansprüche 29 bis 31, wobei die Kalzinierungstemperatur größer 600°C beträgt.

**35.** Verfahren gemäß einem der Ansprüche 29 bis 32, wobei die Kalzinierungstemperatur größer 700°C beträgt.

**36.** Verfahren zur Herstellung der chemischen Verbindung nach einem der Ansprüche 1 bis 18 enthaltend folgende Schritte:

a. Co-Fällung von sphärischen Mischmetallhydroxiden aus entsprechenden Metallsalzlösungen,
b. Abtrennung des co-gefällten Mischmetallhydroxides aus der Suspension,
c. Waschung des Mischmetallhydroxides,
d. Trocknung und gleichzeitige partielle Oxidation des Mischmetallhydroxides unter sauerstoffhaltiger Atmosphäre bei einer Temperatur von größer als 80°C mindestens 3 Stunden.

**37.** Verwendung der chemischen Verbindung gemäß einem oder mehreren der Ansprüche 1 bis 18 als Vorstoff bei der Herstellung von Kathodenmaterial für Lithium-Sekundärbatterien.

**38.** Ein Produkt aus der Formel $Li_aNi_bM1_cM2_d(O)2$ erhaeltlich von einer Verbindung (einem Kompound) gemaess jedem der Ansprueche 1 bis 8 oder einem Pulver gemaess jedem der Ansprueche 9 bis 18, worin $0.95 \leq a \leq 1.15$ und M1, M2, b, c und d definiert sind wie in Anspruch 1 oder Anspruch 2.

**Claims**

**1.** Chemical compound of the formula
$Ni_bM1_cM2_d(O)_x(OH)_y$,
wherein
M1 stands for at least one element from the group consisting of Fe, Co, Mg, Zn, Cu and mixtures thereof,
M2 stands for at least one element from the group Mn, Al, B, Ca, Cr and mixtures thereof,
$b y \leq 0.8$
$c \leq 0.5$
$d \leq 0.5$ and

x is a number between 0.1 and 0.8,
y is a number between 1.2 and 1.9 and x+y=2.

2. Chemical compound according to Claim 1, wherein

$0.3 \leq by \leq 0.6$
$0.1 \leq c \leq 0.4$
$0.1 \leq d \leq 0.4$.

3. Chemical compound according to Claim 1 or 2, wherein
x is a number between 0.2 and 0.7 and
y is a number between 1.3 and 1.8 and x+y=2.

4. Chemical compound according to Claims 1 to 3, wherein
x is a number between 0.3 and 0.6 and
y is a number between 1.4 and 1.7.

5. Chemical compound according to one of Claims 1 to 4, **characterised in that** it has no gamma-oxyhydroxide structures.

6. Chemical compound according to one of Claims 1 to 5, **characterised in that** it has no alpha-hydroxide structures.

7. Chemical compound according to one of Claims 1 to 6, **characterised in that** the sodium content is less than 2000 ppm.

8. Chemical compound according to one of Claims 1 to 6, **characterised in that** the sodium content is less than 1000 ppm.

9. Powder consisting of the chemical compound according to one of Claims 1 to 8.

10. Powder according to Claim 9, **characterised in that** it has a tap density of greater than 1.7 g/cm$^3$ measured according to ASTM B 527.

11. Powder according to one of Claims 9 or 10, **characterised in that** it has a tap density of greater than 1.9 g/cm$^3$, measured according to ASTM B 527.

12. Powder according to one of Claims 9 to 11, **characterised in that** it has a median particle size of 2-30 $\mu$m, measured according to ASTM B 822.

13. Powder according to one of Claims 9 to 12, **characterised in that** it has a median particle size of 3-15 $\mu$m, measured according to ASTM B 822.

14. Powder according to one of Claims 9 to 13, **characterised in that** the powder particles are in spherical form.

15. Powder according to one of Claims 9 to 14, **characterised in that** the powder particles have an aspect ratio of greater than 0.7.

16. Powder according to one of Claims 9 to 15, **characterised in that** the powder particles have an aspect ratio of greater than 0.9.

17. Powder according to one of Claims 9 to 16, wherein the standardised breadth of the particle size distribution defined according to the formula (1) is less than 1.8,

$$\frac{D90-D10}{D50} \qquad (1)$$

wherein D stands for the diameter of the powder particle.

**18.** Powder according to one of Claims 9 to 17, wherein the standardised breadth of the particle size distribution defined according to the formula (1) is less than 1.2,

$$\frac{D90-D10}{D50} \qquad\qquad (1)$$

wherein D stands for the diameter of the powder particle.

**19.** Method for producing the chemical compound according to one of Claims 1 to 18, said method comprising the following steps:

    a. co-precipitating spherical mixed metal hydroxides from corresponding metal salt solutions,
    b. partially oxidising the precipitation products (mixed metal hydroxides) with use of an oxidising agent,
    c. separating the co-precipitated, partially oxidised mixed metal hydroxide from the suspension,
    d. washing and drying the partially oxidised mixed metal hydroxide

**20.** Method according to Claim 19, wherein the chemical compound is a partially oxidised mixed metal hydroxide.

**21.** Method according to Claim 19 or 20, **characterised in that** the partial oxidation is carried out in a suspension.

**22.** Method according to one of Claims 19 to 21, **characterised in that** the oxidising agent is an oxidising agent from the group consisting of air, oxygen, hydrogen peroxide, sodium persulphate, potassium persulphate and/or mixtures thereof.

**23.** Method according to one of Claims 19 to 22, **characterised in that** the reaction temperature of the suspension during partial oxidation is 25-65 °C.

**24.** Method according to one of Claims 19 to 23, **characterised in that** the reaction temperature of the suspension during partial oxidation is 30-60 °C.

**25.** Method according to one of Claims 19 to 24, wherein the pH value of the suspension is 7-13.

**26.** Method according to one of Claims 19 to 25, wherein the pH value of the suspension is 8-12.

**27.** Method according to one of Claims 19 to 25, **characterised in that** the partial oxidation of the co-precipitated mixed hydroxide lasts 1 to 10 hours.

**28.** Method according to one of Claims 19 to 26, **characterised in that** the partial oxidation of the co-precipitated mixed hydroxide lasts 2 to 8 hours.

**29.** Method according to one of Claims 19 to 27, **characterised in that** the partial oxidation of the co-precipitated mixed hydroxide lasts 4 to 6 hours.

**30.** Method for producing active materials for positive electrodes of secondary batteries, said method comprising the following steps:

    - mixing a chemical compound according to one of Claims 1 to 18 with a lithium-containing component,
    - calcining and sieving the mixture.

**31.** Method for producing active materials for positive electrodes of secondary batteries according to Claim 29, said method comprising the following steps:

    - preparing a powder of the chemical compound according to one of Claims 1-18,
    - converting the powder into a chemical compound $Li_aNi_bM1_cM2_d(O)_2$, wherein M1 stands for at least one element selected from the group consisting of Fe, Co, Mg, Zn, Cu and mixtures thereof, and/or M2 stands for at least one element selected from the group Mn, Al, B, Ca, Cr and mixtures thereof, **characterised in that** the conversion takes place with retention of the form of the secondary particles and/or particle size distribution.

**32.** Method for producing active materials for positive electrodes of secondary batteries according to Claim 29, said method comprising the following steps:

- mixing a chemical compound according to one of Claims 1 to 18 with a lithium-containing component,
- calcining and sieving the mixture.

**33.** Method according to Claim 29 or 30, wherein the lithium-containing component is lithium carbonate, lithium hydroxide, lithium nitrate and/or mixtures thereof.

**34.** Method according to one of Claims 29 to 31, wherein the calcination temperature is greater than 600 °C.

**35.** Method according to one of Claims 29 to 32, wherein the calcination temperature is greater than 700 °C.

**36.** Method for producing the chemical compound according to one of Claims 1 to 18, said method comprising the following steps:

a. co-precipitating spherical mixed metal hydroxides from corresponding metal salt solutions,
b. separating the co-precipitated mixed metal hydroxide from the suspension,
c. washing the mixed metal hydroxide,
d. drying and simultaneously partially oxidising the mixed metal hydroxide under oxygenous atmosphere at a temperature of greater than 80 °C for at least 3 hours.

**37.** Use of the chemical compound according to one or more of Claims 1 to 18 as a component in the production of cathode material for lithium secondary batteries.

**38.** A product made from the formula $Li_aNi_bM1_cM2_d(O)_2$ obtainable from a compound according to each of Claims 1 to 8 or from a powder according to each of Claims 9 to 18, wherein $0.95 \leq a \leq 1.15$ and M1, M2, b, c and d are defined as per Claim 1 or Claim 2.

**Revendications**

**1.** Composé chimique de la formule
$Ni_bM1_cM2_d(O)_x(OH)_y$,
dans laquelle
M1 signifie au moins un élément parmi le groupe constitué de Fe, Co, Mg, Zn, Cu et leurs mélanges,
M2 signifie au moins un élément parmi le groupe Mn, Al, B, Ca, Cr et leurs mélanges,
$b \leq 0,8$,
$c \leq 0,5$,
$d \leq 0,5$ et
x est un nombre entre 0,1 et 0,8,
y est un nombre entre 1,2 et 1,9, et la somme de x+y=2.

**2.** Composé chimique selon la revendication 1, dans lequel
$0,3 \leq b \leq 0,6$,
$0,1 \leq c \leq 0,4$,
$0,1 \leq d \leq 0,4$.

**3.** Composé chimique selon la revendication 1 ou 2, dans lequel
x est un nombre entre 0,2 et 0,7, et
y est un nombre entre 1,3 et 1,8 et la somme de x + y = 2.

**4.** Composé chimique selon les revendications 1 à 3, dans lequel
x est un nombre entre 0,3 et 0,6, et
y est un nombre entre 1,4 et 1,7.

**5.** Composé chimique selon l'une quelconque des revendications 1 à 4, **caractérisé en ce qu'**il ne présente pas de structures oxyhydroxyde gamma.

6. Composé chimique selon l'une quelconque des revendications 1 à 5, **caractérisé en ce qu'**il ne présente pas de structures hydroxyde alpha.

7. Composé chimique selon l'une quelconque des revendications 1 à 6, **caractérisé en ce que** la teneur en sodium est inférieure à 2000 ppm.

8. Composé chimique selon l'une quelconque des revendications 1 à 6, **caractérisé en ce que** la teneur en sodium est inférieure à 1000 ppm.

9. Poudre constituée du composé chimique selon l'une quelconque des revendications 1 à 8.

10. Poudre selon la revendication 9, **caractérisée en ce qu'**elle présente une densité volumique après tassement, mesurée selon ASTM B 527, supérieure à 1,7 g/cm$^3$.

11. Poudre selon la revendication 9 ou 10, **caractérisée en ce qu'**elle présente une densité volumique après tassement, mesurée selon ASTM B 527, supérieure à 1,9 g/cm$^3$.

12. Poudre selon l'une quelconque des revendications 9 à 11, **caractérisée en ce qu'**elle présente une granulométrie moyenne, mesurée selon ASTM B 822, de 2 à 30 $\mu$m.

13. Poudre selon l'une quelconque des revendications 9 à 12, **caractérisée en ce qu'**elle présente une granulométrie moyenne, mesurée selon ASTM B 822, de 3 à 15 $\mu$m.

14. Poudre selon l'une quelconque des revendications 9 à 13, **caractérisée en ce que** les particules de poudre présentent une forme sphérique.

15. Poudre selon l'une quelconque des revendications 9 à 14, **caractérisée en ce que** les particules de poudre présentent un facteur de forme supérieur à 0,7.

16. Poudre selon l'une quelconque des revendications 9 à 15, **caractérisée en ce que** les particules de poudre présentent un facteur de forme supérieur à 0,9.

17. Poudre selon l'une quelconque des revendications 9 à 16, dans laquelle la largeur normalisée de la distribution de granulométrie, définie selon la formule (1), est inférieure à 1,8,

$$\frac{D90-D10}{D50} \qquad (1),$$

dans laquelle D signifie le diamètre des particules de poudre.

18. Poudre selon l'une quelconque des revendications 9 à 17, dans laquelle la largeur normalisée de la distribution de granulométrie, définie selon la formule (1), est inférieure à 1,2,

$$\frac{D90-D10}{D50} \qquad (1),$$

dans laquelle D signifie le diamètre des particules de poudre.

19. Procédé de fabrication du composé chimique selon l'une quelconque des revendications 1 à 18 constitué des étapes suivantes :

    a. co-précipitation d'hydroxydes métalliques mixtes sphériques à partir de solutions de sels métalliques correspondantes,
    b. oxydation partielle des produits de précipitation (hydroxydes métalliques mixtes) en utilisant un oxydant,

c. séparation de l'hydroxyde métallique mixte partiellement oxydé, co-précipité de la suspension,

d. lavage et séchage de l'hydroxyde métallique mixte partiellement oxydé.

**20.** Procédé selon la revendication 19, dans lequel le composé chimique est un hydroxyde métallique mixte partiellement oxydé.

**21.** Procédé selon la revendication 19 ou 20, **caractérisé en ce que** l'oxydation partielle s'effectue dans une suspension.

**22.** Procédé selon l'une quelconque des revendications 19 à 21, **caractérisé en ce qu'**il s'agit pour l'oxydant d'un oxydant provenant du groupe constitué de l'air, de l'oxygène, du peroxyde d'hydrogène, du peroxydisulfate de sodium, du peroxydisulfate de potassium et/ou de leurs mélanges.

**23.** Procédé selon l'une quelconque des revendications 19 à 22, **caractérisé en ce que** la température de réaction de la suspension se monte à 25 à 65°C lors de l'oxydation partielle.

**24.** Procédé selon l'une quelconque des revendications 19 à 23, **caractérisé en ce que** la température de réaction de la suspension se monte à 30 à 60°C lors de l'oxydation partielle.

**25.** Procédé selon l'une quelconque des revendications 19 à 24, dans lequel le pH de la suspension est de 7 à 13.

**26.** Procédé selon l'une quelconque des revendications 19 à 25, dans lequel le pH de la suspension est de 8 à 12.

**27.** Procédé selon l'une quelconque des revendications 19 à 25, **caractérisé en ce que** l'oxydation partielle de l'hydroxyde mixte co-précipité dure 1 à 10 heures.

**28.** Procédé selon l'une quelconque des revendications 19 à 26, **caractérisé en ce que** l'oxydation partielle de l'hydroxyde mixte co-précipité dure 2 à 8 heures.

**29.** Procédé selon l'une quelconque des revendications 19 à 27, **caractérisé en ce que** l'oxydation partielle de l'hydroxyde mixte co-précipité dure 4 à 6 heures.

**30.** Procédé de fabrication de matériaux actifs pour des électrodes positives de batteries secondaires contenant les étapes suivantes :

- mélange d'un composé chimique selon l'une quelconque des revendications 1 à 18 avec un composant contenant du lithium,
- calcination et tamisage du mélange.

**31.** Procédé de fabrication de matériaux actifs pour des électrodes positives de batteries secondaires selon la revendication 29, contenant les étapes :

- fourniture d'une poudre du composé chimique selon l'une quelconque des revendications 1 à 18,
- transformation de la poudre en un composé chimique $Li_aNi_bM1_cM2_d(O)2$, dans laquelle M1 signifie au moins un élément sélectionné parmi le groupe constitué de Fe, Co, Mg, Zn, Cu et leurs mélanges, et/ou M2 signifie au moins un élément sélectionné parmi le groupe Mn, Al, B, Ca, Cr et leurs mélanges, **caractérisé en ce que** la transformation a lieu avec rétention de la forme des particules secondaires et/ou de la distribution de granulométrie.

**32.** Procédé de fabrication de matériaux actifs pour des électrodes positives de batteries secondaires selon la revendication 29, contenant les étapes suivantes :

- mélange d'un composé chimique selon l'une quelconque des revendications 1 à 18 avec un composant contenant du lithium,
- calcination et tamisage du mélange.

**33.** Procédé selon la revendication 29 ou 30, dans lequel il s'agit pour le composant contenant du lithium du carbonate de lithium, de l'hydroxyde de lithium, du nitrate de lithium et/ou de leurs mélanges.

**34.** Procédé selon l'une quelconque des revendications 29 à 31, dans lequel la température de calcination est supérieure à 600°C.

**35.** Procédé selon l'une quelconque des revendications 29 à 32, dans lequel la température de calcination est supérieure à 700°C.

**36.** Procédé de fabrication du composé chimique selon l'une quelconque des revendications 1 à 18 contenant les étapes suivantes :

a. co-précipitation d'hydroxydes métalliques mixtes sphériques à partir de solutions de sels métalliques correspondantes,
b. séparation de l'hydroxyde métallique mixte co-précipité de la suspension,
c. lavage de l'hydroxyde métallique mixte,
d. séchage et oxydation partielle simultanée de l'hydroxyde métallique mixte dans une atmosphère contenant de l'oxygène à une température supérieure à 80°C pendant au moins 3 heures.

**37.** Utilisation du composé chimique selon une ou plusieurs des revendications 1 à 18 en tant que précurseur lors de la fabrication de matériau de cathode pour des batteries secondaires au lithium.

**38.** Produit de la formule $Li_aNi_bM1_cM2_d(O)_2$ pouvant être obtenu à partir d'un composé selon chacune des revendications 1 à 8 ou d'une poudre selon chacune des revendications 9 à 18, dans lequel $0,95 \leq a \leq 1,15$ et M1, M2, b, c et d sont définis comme à la revendication 1 ou la revendication 2.

**Fig. 1**

**Fig. 2**

00070791       10 µm     HCST

Fig. 3

00070792       3 µm     HCST

Fig. 4

Fig. 5

Fig. 6

Fig. 7

Fig. 8

Fig. 9

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 10027611 A
- US 20020053663 A1
- US 20030059490 A1
- US 20030054251 A1
- WO 2004092073 A1
- US 200310054251 A1
- US 200310054251 A
- US 5476530 A

**In der Beschreibung aufgeführte Nicht-Patentliteratur**

- *J. Power Sources,* 1982, vol. 8, 229